# EUROPEAN PATENT APPLICATION

(11) **EP 4 491 352 A1**
(43) Date of publication of application: **15.01.2025**
(21) Application number: 23766851.2
(22) Date of filing: 07.03.2023
(51) Int. Cl.: B25J 13/00

(54) **ROBOT CONTROL METHOD AND ROBOT**

(30) Priority: 08.03.2022 JP 2022035737; 18.04.2022 JP 2022068518
(71) Applicant: KAWASAKI JUKOGYO KABUSHIKI KAISHA, Kobe-shi, Hyogo 650-8670 (JP)
(72) Inventor: KUBO, Hitoshi, Kobe-shi, Hyogo 650-8670 (JP); MINAMI, Toshiya, Kobe-shi, Hyogo 650-8670 (JP); OTANI, Natsuki, Kobe-shi, Hyogo 650-8670 (JP)
(74) Representative: Müller-Boré & Partner Patentanwälte PartG mbB
(86) International application number: PCT/JP2023/008614
(87) International publication number: WO 2023/171675

(57) **Abstract**

A control method of a robot (1) includes: causing a first robot arm (200A) provided in the robot and a second robot arm (200B) provided in the robot to move a first end effector (300) of the first robot arm and a second end effector (400) of the second robot arm such that the first end effector and the second end effector are arranged on both sides of a placed plate-shaped object (TR); causing the first robot arm to move the first end effector toward a first end portion (TRa) of the plate-shaped object, and causing the first end effector to grip the first end portion; and causing the first robot arm to move the first end effector toward a destination position, and causing the first end effector to place the plate-shaped object at the destination position.

## Description

### CROSS-REFERENCE TO RELATED APPLICATIONS

The present application is intended to prove the priorities and the profits of JP2022-035737 and JP2022-068518, which have been filed to the Japanese patent office on March 8, 2022 and April 18, 2022, respectively, and are cited as a part of the present application by referring to the entire applications.

### TECHNICAL FIELD

The present disclosure relates to a method of controlling a robot, and a robot.

### BACKGROUND ART

For example, JP2018-008820A discloses a robot including a pair of robot arms. Each of the robot arms includes a hand portion having a clamping portion. The clamping portion includes an L-shaped plate portion. The robot grips and transfers a tray by inserting the clamping portions of the pair of robot arms under the tray from both sides of the tray and laterally sandwiching the tray using the two clamping portions.

### SUMMARY OF INVENTION

The robot disclosed in JP2018-008820A needs to use two robot arms to grip and transfer a plate-shaped object such as a tray. The present disclosure provides a robot and a method of controlling a robot that reduce operations of robot arms related to transferring of a plate-shaped object.

According to an aspect of the present disclosure, a control method of a robot includes: causing a first robot arm provided in the robot and a second robot arm provided in the robot to move a first end effector of the first robot arm and a second end effector of the second robot arm such that the first end effector and the second end effector are arranged on both sides of a placed plate-shaped object; causing the first robot arm to move the first end effector toward a first end portion of the plate-shaped object, and causing the first end effector to operate so as to grip the first end portion; and causing the first robot arm to move the first end effector toward a destination position, and causing the first end effector to place the plate-shaped object at the destination position.

### BRIEF DESCRIPTION OF DRAWINGS

[FIG. 1] FIG. 1 is a diagram illustrating an example of a configuration of a robot system according to an embodiment.
[FIG. 2] FIG. 2 is a side view of a moving device in FIG. 1.
[FIG. 3] FIG. 3 is a block diagram illustrating an example of components of the robot system according to the embodiment.
[FIG. 4] FIG. 4 is a side view illustrating an example of components in one state of a first end effector of the robot in FIG. 1.
[FIG. 5] FIG. 5 is a side view illustrating an example of the components in the other state of the first end effector of the robot in FIG. 1.
[FIG. 6] FIG. 6 is a side view illustrating an example of components in one state of a second end effector of the robot in FIG. 1.
[FIG. 7] FIG. 7 is a side view illustrating an example of the components in the other state of the second end effector of the robot in FIG. 1.
[FIG. 8] FIG. 8 is a flowchart illustrating an example of a first operation of the robot system according to the embodiment.
[FIG. 9] FIG. 9 is a perspective view illustrating an example of a state of the robot in the first operation.
[FIG. 10] FIG. 10 is a perspective view illustrating an example of the state of the robot included in the first operation.
[FIG. 11] FIG. 11 is a perspective view illustrating an example of the state of the robot included in the first operation.
[FIG. 12] FIG. 12 is a perspective view illustrating an example of the state of the robot included in the first operation.
[FIG. 13] FIG. 13 is a perspective view illustrating an example of the state of the robot included in the first operation.
[FIG. 14] FIG. 14 is a flowchart illustrating an example of a second operation of the robot system according to the embodiment.
[FIG. 15] FIG. 15 is a perspective view illustrating an example of a state of the robot included in the second operation.
[FIG. 16] FIG. 16 is a perspective view illustrating an example of the state of the robot included in the second operation.
[FIG. 17] FIG. 17 is a perspective view illustrating an example of the state of the robot included in the second operation.
[FIG. 18] FIG. 18 is a perspective view illustrating an example of the state of the robot included in the second operation.
[FIG. 19] FIG. 19 is a side view illustrating an example of components of another first end effector as in FIG. 4.
[FIG. 20] FIG. 20 is a perspective view illustrating an example of components of another tray.
[FIG. 21] FIG. 21 is a flowchart illustrating an example of a third operation of the robot system according to the embodiment.
[FIG. 22] FIG. 22 is a perspective view illustrating an example of a state of the robot included in the third operation.
[FIG. 23] FIG. 23 is a perspective view illustrating an example of the state of the robot included in the third operation.
[FIG. 24] FIG. 24 is a perspective view illustrating an example of the state of the robot included in the third operation.
[FIG. 25] FIG. 25 is a perspective view illustrating an example of the state of the robot included in the third operation.
[FIG. 26] FIG. 26 is a perspective view illustrating an example of the state of the robot included in the third operation.
[FIG. 27] FIG. 27 is a perspective view illustrating an example of the state of the robot included in the third operation.
[FIG. 28] FIG. 28 is a perspective view illustrating an example of the state of the robot included in the third operation.
[FIG. 29] FIG. 29 is a perspective view illustrating an example of the state of the robot included in the third operation.

### DESCRIPTION OF EMBODIMENTS

Hereinafter, an exemplary embodiment of the present disclosure will be described with reference to the drawings. The embodiment described below shows a comprehensive or specific example. Among components in the following embodiment, components that are not described in the independent claims indicating the most significant concept will be described as any components. Each drawing in the attached drawings is a schematic drawing and is not necessarily strictly illustrated. In each of the drawings, substantially the same components are denoted by the same reference numerals, and redundant description may be omitted or simplified. In the present specification and claims, the "device" may mean not only one device but also a system including a plurality of devices.

### [Configuration of Robot System]

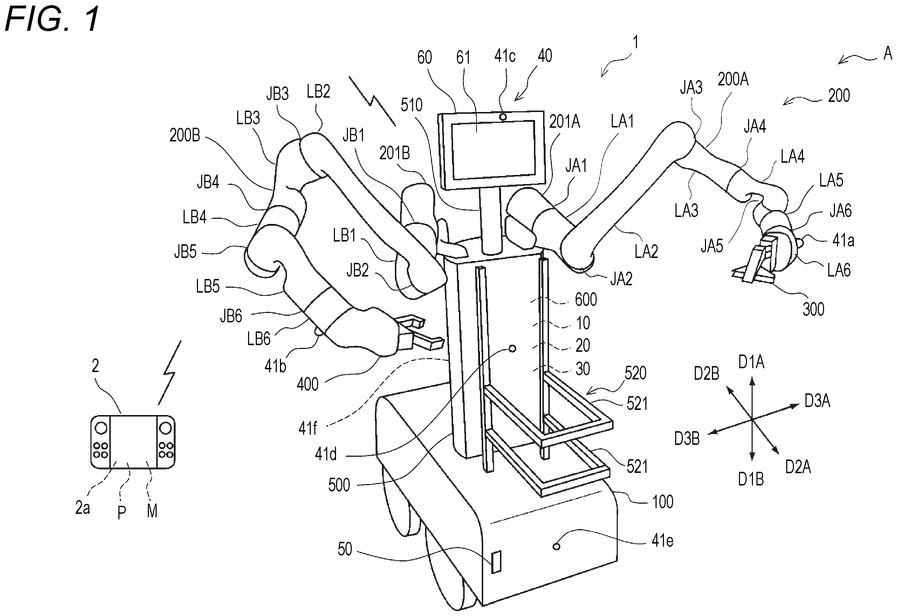

An example of a configuration of a robot system A according to an exemplary embodiment will be described with reference to FIG. 1. FIG. 1 is a diagram illustrating the example of the configuration of the robot system A according to the embodiment. The robot system A includes a robot 1 and an input device 2.

Although not limited to the following, in the present embodiment, the input device 2 is arranged at a position away from the robot 1. The input device 2 receives input of a command, information, data, and the like by a user, and transmits the received command, information, data, and the like to the robot 1. The input device 2 receives a command, information, data, and the like from the robot 1. For example, the user who uses the input device 2 may be a manager of the robot system A, an operator of the robot 1, a service provider via the robot system A, or a service receiver via the robot system A.

The input device 2 includes a communication device 2a communicating with the robot 1, and a processing circuit including a processor P and a memory M. The communication between the communication device 2a and the robot 1 is a wireless communication, but may also be a wired communication or a combination of wired and wireless communications. Any wired communication or wireless communication may be used. The communication device 2a and the robot 1 may directly or indirectly perform the wireless communication. In the indirect wireless communication, the communication device 2a and the robot 1 may be connected to a communication network via a wired communication or a wireless communication, and may communicate with each other via the communication network. The communication device 2a may include a communication circuit.

The communication network is not particularly limited, and may include, for example, a local area network (LAN), a wide area network (WAN), the Internet, or a combination of two or more thereof. The communication network may use near field communication such as Bluetooth (registered trademark) and ZigBee (registered trademark), a network dedicated line, a communication carrier dedicated line, a public switched telephone network (PSTN), a mobile communication network, an Internet network, satellite communication, or a combination of two or more thereof. The mobile communication network may use a fourth-generation mobile communication system, a fifth-generation mobile communication system, and the like. The communication network can include one or a plurality of networks.

The input device 2 may include one or more of a computer such as a personal computer, a smart device such as a smartphone and a tablet computer, a personal digital assistant, a game terminal, a known teaching device such as a teach pendant used for a teaching operation to a robot, a known operation device of a robot, other operation devices, other terminal devices, a device using the above, and a device in which the above is improved. The input device 2 may be a dedicated device designed for the robot 1, and may be a general-purpose device available in a general market. When the input device 2 is a general-purpose device, a function of the input device 2 may be implemented by installing dedicated software.

The robot 1 performs an operation of providing a service to the user. The robot 1 can be used in various services such as care, medical, cleaning, security, guidance, rescue, cooking, commodity provision, and physical distribution. The robot 1 includes a moving device 100, one or more robot arms 200, a support 500, and a control device 600. The robot 1 includes a secondary battery module 10, a power supply circuit 20, a communication device 30, an imaging device 40, a sensor 50, and a presentation device 60. Although not limited to the following, in the present embodiment, a robot arm capable of functioning as an industrial robot arm is used as the robot arm 200. The imaging device 40 and the presentation device 60 may function as devices for communicating with the user around the robot 1.

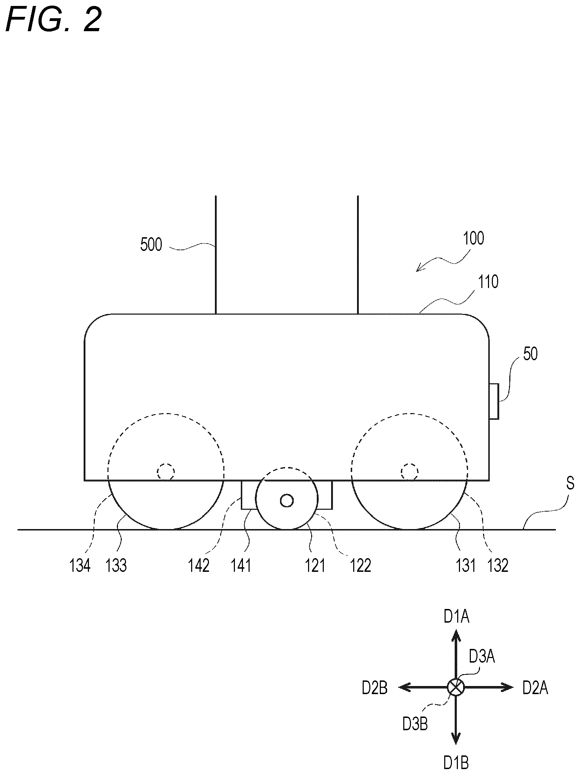

FIG. 2 is a side view of the moving device 100 in FIG. 1. As illustrated in FIG. 2, the moving device 100 is movable by itself, and travels by wheels in the present embodiment. The moving device 100 includes a main body 110, drive wheels 121 and 122, auxiliary wheels 131 to 134, and movement driving devices 141 and 142. The drive wheels 121 and 122 and the auxiliary wheels 131 to 134 are rotatably attached to the main body 110. The drive wheels 121 and 122 and the auxiliary wheels 131 to 134 are in contact with a support surface S on which the robot 1 is arranged, and support the main body 110 and the robot 1 from below.

Here, an upper direction D1A, a lower direction D1B, a front direction D2A, a rear direction D2B, a side direction D3A, and a side direction D3B are directions relative to the robot 1. The upper direction D1A is a direction from the moving device 100 toward the support 500, and coincides with a vertically upper direction perpendicular to the support surface S when the support surface S is horizontal. The lower direction D1B is a direction opposite to the upper direction D1A, and coincides with a vertically lower direction perpendicular to the support surface S when the support surface S is horizontal. The directions D2A and D2B are directions opposite to each other, and are directions perpendicular to the directions D1A and D1B. The front direction D2A is a forward direction of the moving device 100, and the rear direction D2B is a reverse direction of the moving device 100. The side directions D3A and D3B are directions opposite to each other, and are directions perpendicular to the directions D1A, D1B, D2A, and D2B. The directions D2A, D2B, D3A, and D3B extend in a horizontal direction when the support surface S is horizontal, and extend along the support surface S when the support surface S is flat. In the present specification and claims, the descriptions "perpendicular", "vertically", "horizontal", and "parallel" may include a completely perpendicular state, a completely vertical state, a completely horizontal state, and a completely parallel state, respectively, and may include a substantially perpendicular state, a substantially vertical state, a substantially horizontal state, and a substantially parallel state close to the completely perpendicular state, the completely vertical state, the completely horizontal state, and the completely parallel state, respectively.

Although not limited to the following, in the present embodiment, the auxiliary wheels 131 to 134 are arranged around the drive wheels 121 and 122 in the main body 110. Directions of respective rotation shafts of the auxiliary wheels 131 to 134 may be fixed, and the directions of the respective rotation shafts thereof may be changed like universal casters. The drive wheels 121 and 122 are arranged side by side in the side direction D3A to be rotatable on the same shaft extending in the side direction D3A. A direction of the rotation shaft of the drive wheels 121 and 122 is fixed with respect to the main body 110.

The movement driving devices 141 and 142 are respectively arranged in the main body 110 and rotationally drive the drive wheels 121 and 122. For example, each of the movement driving devices 141 and 142 includes a servo motor using electric power as a power source and serving as an electric actuator. The servo motors are controlled by the control device 600. The movement driving devices 141 and 142 can cause the moving device 100 to perform forward movement, reverse movement, and various turning by controlling a rotation direction and a rotation speed of the drive wheels 121 and 122.

A structure of the moving device 100 is not limited to the structure described above, and any structure can be used as long as the moving device 100 can be moved in various directions. For example, the moving device 100 may move by using other traveling means such as a crawler without using the wheels.

As illustrated in FIG. 1, the support 500 is arranged on the moving device 100 and is supported by the moving device 100. The support 500 has a columnar shape extending in the upper direction D1A from the moving device 100. The support 500 accommodates and supports various components of the robot 1. The support 500 includes a support column 510 and a rack 520. The support column 510 extends in the upper direction D1A from the support 500 and supports the presentation device 60. The rack 520 is arranged in the front direction D2A of the support 500. The rack 520 includes one or more shelves 521 on which a plate-shaped object can be placed. In the present embodiment, two shelves 521 are arranged side by side in the upper and lower directions D1A and D1B. The rack 520 is an example of a placement portion.

Although not limited to the following, in the present embodiment, the robot 1 includes two robot arms 200A and 200B as the robot arms 200. The robot arms 200A and 200B are arranged at an upper portion of the support 500 and are supported by the support 500. The robot 1 is a double-arm type robot. Each of the robot arms 200A and 200B includes two or more joints.

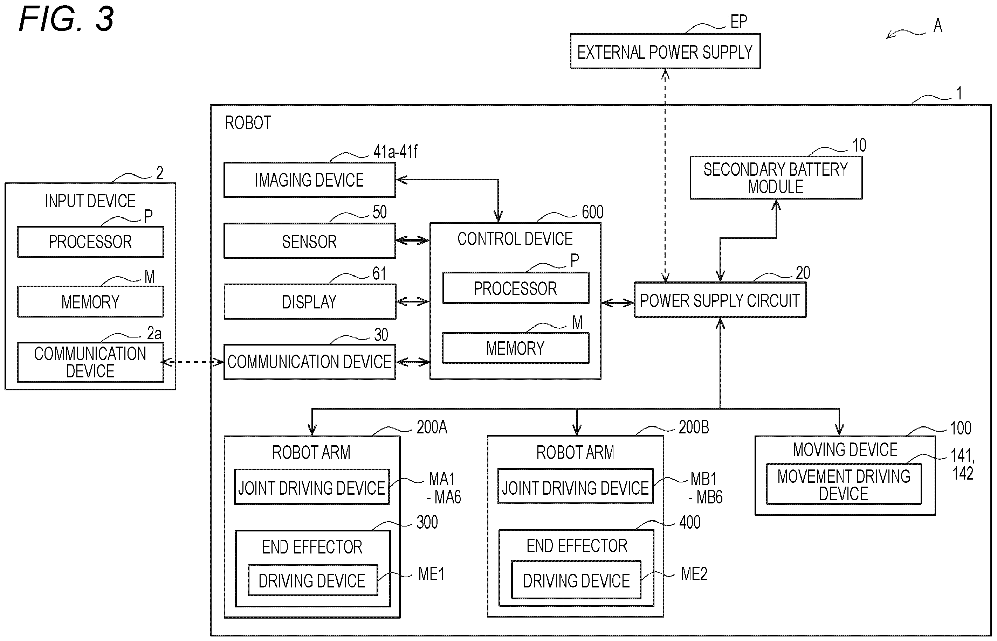

Although not limited to the following, in the present embodiment, the robot arm 200A includes a base 201A, six links LA1 to LA6, six joints JA1 to JA6 that interconnect the base 201A and the links LA1 to LA6, joint driving devices MA1 to MA6 that drive the joints JA1 to JA6, and a first end effector 300. The robot arm 200B includes a base 201B, six links LB1 to LB6, six joints JB1 to JB6 that interconnect the base 201B and the links LB1 to LB6, joint driving devices MB1 to MB6 that drive the joints JB1 to JB6, and a second end effector 400. The joints JA1 to JA6 and JB1 to JB6 are rotary joints. Each of the joint driving devices MA1 to MA6 and MB1 to MB6 includes a servo motor using electric power as a power source and serving as an electric actuator. The servo motors are controlled by the control device 600. The joint driving devices MA1 to MA6 and MB1 to MB6 are illustrated in FIG. 3.

The bases 201A and 201B are fixed to the upper portion of the support 500. The bases 201A and 201B are arranged at positions on the support column 510 in the side directions D3A and D3B, respectively. The bases 201A and 201B are connected to the links LA1 and LB1 via the joints JA1 and JB1, respectively. The links LA1 and LB1 extend in directions along pivot shafts of the joints JA1 and JB1, respectively. The pivot shafts of the joints JA1 and JB1 extend in extending directions of the bases 201A and 201B, respectively. The pivot shaft of the joint JA1 extends along the front direction D2A, and is, for example, inclined from the front direction D2A toward the side direction D3A and the lower direction D1B as advancing in the front direction D2A. The pivot shaft of the joint JB1 extends along the front direction D2A, and is, for example, inclined from the front direction D2A toward the side direction D3B and the lower direction D1B as advancing in the front direction D2A.

The links LA2 and LB2 are connected to the links LA1 and LB1 via the joints JA2 and JB2, respectively. The links LA2 and LB2 extend in directions intersecting pivot shafts of the joints JA2 and JB2, and for example, extend in directions perpendicular to the pivot shafts of the joints JA2 and JB2, respectively. The pivot shafts of the joints JA2 and JB2 extend in directions intersecting the pivot shafts of the joints JA1 and JB1, and for example, extend in directions perpendicular to the pivot shafts of the joints JA1 and JB1, respectively.

The links LA3 and LB3 are connected to the links LA2 and LB2 via the joints JA3 and JB3, respectively. The links LA3 and LB3 extend in directions intersecting pivot shafts of the joints JA3 and JB3, and for example, extend in directions perpendicular to the pivot shafts of the joints JA3 and JB3, respectively. The pivot shafts of the joints JA3 and JB3 extend in directions along the pivot shafts of the joints JA2 and JB2, and for example, extend in directions parallel to the pivot shafts of the joints JA2 and JB2, respectively.

The links LA4 and LB4 are connected to the links LA3 and LB3 via the joints JA4 and JB4, respectively. The links LA4 and LB4 extend in directions along pivot shafts of the joints JA4 and JB4, respectively. The pivot shafts of the joints JA4 and JB4 extend in directions intersecting the pivot shafts of the joints JA3 and JB3, and for example, extend in directions perpendicular to the pivot shafts of the joints JA3 and JB3, respectively.

The links LA5 and LB5 are connected to the links LA4 and LB4 via the joints JA5 and JB5, respectively. The links LA5 and LB5 extend in directions intersecting pivot shafts of the joints JA5 and JB5, and for example, extend in directions perpendicular to the pivot shafts of the joints JA5 and JB5, respectively. The pivot shafts of the joints JA5 and JB5 extend in directions intersecting the pivot shafts of the joints JA4 and JB4, and for example, extend in directions perpendicular to the pivot shafts of the joints JA4 and JB4, respectively.

The links LA6 and LB6 are connected to the links LA5 and LB5 via the joints JA6 and JB6, respectively. The links LA6 and LB6 extend in directions along pivot shafts of the joints JA6 and JB6, respectively. The pivot shafts of the joints JA6 and JB6 extend in directions intersecting the pivot shafts of the joints JA5 and JB5, and for example, extend in directions perpendicular to the pivot shafts of the joints JA5 and JB5, respectively. Each of the links LA6 and LB6 includes a mechanical interface at a tip end thereof, and is physically and electrically connected to the end effector 300 or 400 via the mechanical interface.

The end effectors 300 and 400 are detachably attached to the links LA6 and LB6, respectively. The end effectors 300 and 400 are capable of applying an action to an object to be handled by the robot 1. The end effectors 300 and 400 may also be referred to as "robot hands" or "hands". The end effectors 300 and 400 include driving devices ME1 and ME2, and operate due to drive forces of the driving devices ME1 and ME2, respectively. Although not limited to the following, in the present embodiment, each of the driving devices ME1 and ME2 includes a servo motor using electric power as a power source and serving as an electric actuator. The driving devices ME1 and ME2 are illustrated in FIG. 3. For example, a force sensor for detecting a direction and a magnitude of an acting force may be arranged at each of connection portions between the end effectors 300 and 400 and the links LA6 and LB6. The force sensor may be an inner force sensor. Details of the structures of the end effectors 300 and 400 will be described later.

The robot arms 200A and 200B as described above have a structure of a vertical articulated robot arm, and may have any structure. For example, the robot arms 200A and 200B may be horizontal articulated robot arms, other types of vertical articulated robot arms, polar coordinate robot arms, cylindrical coordinate robot arms, Cartesian coordinate robot arms, or other types of robot arms. The number of robot arms 200 may be one or more, and preferably two or more. The number of joints of each robot arm 200 may be two or more. The joints of the robot arm 200 are not limited to the rotary joints, and may include, for example, a prismatic joint.

The presentation device 60 presents various information to the user around the robot 1. Although not limited to the following, in the present embodiment, the presentation device 60 includes a display 61 attached to the support column 510. The display 61 displays an image of image data transmitted from the control device 600. The control device 600 may cause the display 61 to display an image for communicating with the user facing the robot 1, an image in response to a command received from the input device 2, an image for providing various other information to the user, and the like. The presentation device 60 may include a speaker that converts an audio signal into a sound wave and emits the sound wave as audio, a projector that projects an image, and the like. The speaker and the projector may output an audio and an image corresponding to an audio signal and an image signal transmitted from the control device 600, respectively.

The imaging device 40 includes imaging devices 41a to 41f, and detects various information around the robot 1. Each of the imaging devices 41a to 41f includes a camera that captures a digital image. One or more of the imaging devices 41a to 41f may include a three-dimensional camera capable of detecting a distance to a subject. Examples of the three-dimensional camera may include a stereo camera, a time-of-flight-camera (TOF camera), a pattern light projection camera such as fringe projection, and a camera using a light-section method. Each of the imaging devices 41a to 41f outputs data of the captured image to the control device 600. The control device 600 may use the image data acquired by the imaging devices 41a to 41f in a control performed by the control device 600 itself, and may output the image data to the input device 2. The control device 600 may perform an image process for extracting the subject from the image, detecting the distance from the camera to the subject, and the like.

The imaging devices 41a and 41b are arranged at the robot arms 200A and 200B, for example, are arranged at the links LA6 and LB6, and capture images of workpieces of the end effectors 300 and 400, respectively. The imaging device 41c is arranged at the display 61, and captures an image of the user facing the robot 1. The imaging device 41d is arranged at the support 500, and captures an image of the front of the robot 1. The imaging device 41e is arranged at the moving device 100, and captures an image of the support surface S in front of the robot 1 and the vicinity thereof. The imaging device 41f is arranged at the support 500, and captures an image of the rear of the robot 1. The robot 1 may include a microphone that acquires an audio from the surroundings thereof and outputs an audio signal of the audio. The microphone may output the audio signal to the control device 600.

The sensor 50 detects various information around the robot 1. The sensor 50 scans the periphery of the robot 1, and outputs a scan result to the control device 600. The control device 600 may use the scan result of the sensor 50 in the control performed by the control device 600 itself, and may output the scan result to the input device 2. Although not limited to the following, in the present embodiment, the sensor 50 is arranged in the moving device 100, and is oriented toward the front direction D2A. The sensor 50 may scan a horizontal range of spreading from the moving device 100 toward the front direction D2A and the side directions D3A and D3B. The sensor 50 may scan a vertical range including the support surface S and the vicinity thereof. The sensor 50 may be capable of detecting the support surface S and an object such as an article within the scanned ranges, and a distance to the object. Such a sensor 50 can detect a state of the support surface S in front of the robot 1 and the article on the support surface S as well as positions of various portions on the support surface S and a position of the article.

The sensor 50 performs detection using a light wave, a laser, magnetism, a radio wave, an electromagnetic wave, an ultrasonic wave or a combination of two or more thereof, and may include a photoelectric sensor, a laser sensor, a radio wave sensor, an electromagnetic wave sensor, an ultrasonic sensor, various lidars (LiDAR) or a combination of two or more thereof.

The control device 600, the secondary battery module 10, the power supply circuit 20, and the communication device 30 are arranged in the support 500. The secondary battery module 10 functions as an electric power source of the robot 1. The secondary battery module 10 includes one or more secondary batteries. The secondary battery is a battery capable of charging and discharging electric power. Examples of the secondary battery may include a lead storage battery, a lithium ion secondary battery, an all-solid-state battery, a nickel-hydrogen storage battery, and a nickel-cadmium storage battery.

The power supply circuit 20 controls supply and demand of the electric power to the secondary battery module 10 in response to a command and the like from the control device 600. For example, the power supply circuit 20 may include devices such as a converter, an inverter, a transformer, and an amplifier. The power supply circuit 20 receives electric power supplied from an external power supply EP such as a commercial power supply, and supplies the electric power to the secondary battery module 10 and stores the electric power while controlling the electric power. The power supply circuit 20 supplies the electric power stored in the secondary battery module 10 to components consuming electric power in the robot 1 while controlling the electric power. The external power supply EP is illustrated in FIG. 3.

The communication device 30 communicates with the communication device 2a of the input device 2. The communication device 30 has a structure suitable for communication to be used. The communication device 30 may include a communication circuit.

The control device 600 controls the entire robot 1. FIG. 3 is a block diagram illustrating an example of components of the robot system A according to the embodiment. As illustrated in FIG. 3, the control device 600 is communicably connected to the input device 2 via the communication device 30. The control device 600 controls operations of various components of the robot 1 in response to a command and the like received from the input device 2. The control device 600 controls operations of various components of the robot 1 according to a stored control program.

Examples of the components as control targets by the control device 600 may include the movement driving devices 141 and 142, the joint driving devices MA1 to MA6 and MB1 to MB6, the driving devices ME1 and ME2 of the end effectors 300 and 400, the power supply circuit 20, the communication device 30, the imaging devices 41a to 41f, the sensor 50, the display 61, and the like, but not all of the above are required.

When controlling the electric power supplied to the components, the control device 600 may output a command value of a current and the like to the power supply circuit 20 and supply the electric power of the power supply circuit 20 and the secondary battery module 10 to the components. The control device 600 may servo-control the servo motors. The control device 600 may acquire, from each servo motor, a detection result of a rotation sensor such as an encoder provided in the servo motor. The control device 600 may acquire a value of a supplied current to the servo motor from a current sensor that may be arranged at the servo motor, or from the power supply circuit 20. The control device 600 may determine a command value of a current to the servo motor by using the detection result of the rotation sensor and the value of the supplied current as feedback information.

The control device 600 may cause the components of the robot 1 to perform one or more of an operation in manual driving, an operation in autonomous driving, and an operation in a combination of the manual driving and the autonomous driving.

In the manual driving, the control device 600 may perform a control to operate the components of the robot 1 in accordance with an operation content input to the input device 2 in a sequential manner. The control device 600 may perform the control in accordance with a manual driving program.

In the autonomous driving, the control device 600 may perform a control such that the components of the robot 1 automatically, that is, autonomously operate a series of tasks corresponding to a command input to the input device 2. The control device 600 may perform the control according to an autonomous driving program corresponding to the tasks.

In the combination of the manual driving and the autonomous driving, the control device 600 may perform a control such that the components of the robot 1 appropriately execute the operation according to the operation content in a sequential manner and the operation of autonomously executing the series of tasks in response to the operation content and the command received from the input device 2. The control device 600 may perform the control according to a hybrid driving program obtained by combining the autonomous driving program and the manual driving program, and may perform the control according to the autonomous driving program and the manual driving program in a sequential manner.

Similarly to the input device 2, the control device 600 includes the processing circuit including the processor P and the memory M. For example, the control device 600 may be an electronic circuit board, an electronic control unit, a microcomputer, or other electronic devices. The processor P transmits and receives a command, information, data, and the like to and from other devices. The processor P inputs a signal from various devices and outputs a control signal to a control target.

For example, the memory M may include a volatile semi-conductor memory such as a random access memory (RAM), a nonvolatile semi-conductor memory such as a read-only memory (ROM), a hard disk, a solid state drive (SSD), or a combination of two or more thereof. The memory M stores a program to be executed by the processor P, various types of data, and the like.

At least a part of a plurality of functions of the control device 600 and the input device 2 may be implemented by cooperation of the processor P and the memory M. The processor P and the memory M including the RAM and the ROM form a computer system. For example, the computer system may implement the above functions by the processor P executing a program recorded in the ROM using the RAM as a work area.

A part or all of the functions of the control device 600 and the input device 2 may be implemented by the computer system, may be implemented by a dedicated hardware circuit such as an electronic circuit or an integrated circuit, and may be implemented by a combination of the computer system and the hardware circuit. For example, each of the control device 600 and the input device 2 may execute a process by centralized control by a single computer, and may execute a process by distributed control by cooperation of a plurality of computers.

Without being limited to the following, the processor P may include, for example, one or more of a central processing unit (CPU), a micro processing unit (MPU), a graphics processing unit (GPU), a microprocessor, a processor core, a multiprocessor, an application-specific integrated circuit (ASIC), a field programmable gate array (FPGA), and a reconfigurable processor. The processor P may implement a process by a logic circuit or a dedicated circuit which is a hardware circuit formed in, for example, an integrated circuit such as an integrated circuit (IC) chip and a large scale integration (LSI). The functions of the control device 600 and the input device 2 may be implemented by an integrated circuit that is individually integrated into one chip, and may be implemented by an integrated circuit that is integrated into one chip so as to include a part or all of the functions.

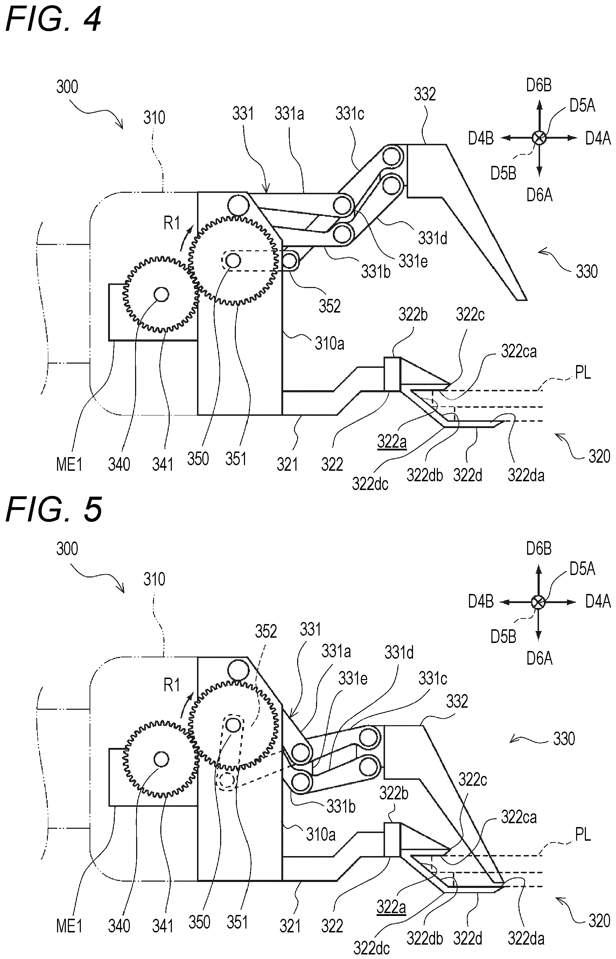

FIGS. 4 and 5 are side views illustrating examples of components in two different states of the first end effector 300 of the robot 1 in FIG. 1. FIGS. 4 and 5 show the inside of a main body 310 of the first end effector 300. As illustrated in FIG. 4, the first end effector 300 has a structure suitable for holding a plate-shaped object PL. The first end effector 300 includes the main body 310, a first holding portion 320, a second holding portion 330, the driving device ME1, a drive shaft 340, and a driven shaft 350. The main body 310 includes a mechanical interface connected to the mechanical interface of the link LA6 or LB6 of the robot arm 200A or 200B.

The driving device ME1, the drive shaft 340, and the driven shaft 350 are arranged in the main body 310. The drive shaft 340 is connected to the driving device ME1 so as to be rotationally driven by the driving device ME1. The driven shaft 350 is engaged with the drive shaft 340 by gears. A driven gear 351 rotating integrally with the driven shaft 350 is engaged with a drive gear 341 rotating integrally with the drive shaft 340. The driving device ME1 rotationally drives the driven shaft 350 via the drive shaft 340.

The first holding portion 320 is fixed to the main body 310 in an immovable manner. At least a part of the first holding portion 320 may be integrated with the main body 310. The first holding portion 320 includes a base link 321 extending from the main body 310 in a direction D4A, and a tip end link 322 connected to a tip end of the base link 321. The base link 321 and the tip end link 322 may be integrated. The base link 321 may have a columnar or finger-like shape and function as a finger portion of the robot hand.

Here, directions D4A, D4B, D5A, D5B, D6A, and D6B illustrated in FIGS. 4 and 5 are directions relative to the first end effector 300. The direction D4A is a direction away from the main body 310, and the direction D4B is a direction opposite to the direction D4A. The directions D5A and D5B are directions opposite to each other, and are directions perpendicular to the directions D4A and D4B. The directions D6A and D6B are directions opposite to each other, and are directions that are perpendicular to the directions D4A and D4B and intersect the directions D5A and D5B. Although not limited to the following, in the present embodiment, the directions D6A and D6B are directions perpendicular to the directions D5A and D5B.

The tip end link 322 includes a recess 322a, and the recess 322a opens in the direction D4A and opens in the directions D5A and D5B. The tip end link 322 includes a base portion 322b connected to the base link 321, and clamping portions 322c and 322d arranged to face each other. The recess 322a is formed between the clamping portions 322c and 322d. The first clamping portion 322c extends from the base portion 322b in the direction D4A and the directions D5A and D5B. The first clamping portion 322c has a flat surface 322ca facing the second clamping portion 322d and oriented in the direction D6A. The widths of the first clamping portion 322c and the surface 322ca in the directions D5A and D5B are larger than the width of the base portion 322b. For example, the first clamping portion 322c may have a plate shape.

The second clamping portion 322d is arranged in the direction D6A with respect to the first clamping portion 322c. The second clamping portion 322d extends from the base portion 322b in the direction D4A and the directions D5A and D5B. The second clamping portion 322d protrudes toward the direction D4A with respect to the first clamping portion 322c. The second clamping portion 322d has flat surfaces 322da and 322db facing the first clamping portion 322c. The widths of the second clamping portion 322d and the surfaces 322da and 322db in the directions D5A and D5B may be larger than the width of the base portion 322b, and may be, for example, equal to the widths of the first clamping portion 322c and the surface 322ca in the directions D5A and D5B.

The surface 322da is positioned in the direction D4A with respect to the surface 322db, and is oriented in the direction D6B. The surface 322da may be extend along the surface 322ca, and may be, for example, parallel to the surface 322ca. The surface 322db is inclined to approach the surface 322ca as advancing in the direction D4B. Accordingly, the recess 322a includes a shape that tapers toward the direction D6B as advancing in the direction D4B. For example, the recess 322a has a triangular prism shape having a wedge-shaped cross section. Although not limited to the following, in the present embodiment, end portions of the surfaces 322db and 322ca in the direction D4A are positioned at the same distance from the base portion 322b, and face each other in the directions D6A and D6B.

The second clamping portion 322d has a plate shape bent at a bent portion 322dc as a boundary between the surfaces 322da and 322db. Accordingly, it is easy to insert the second clamping portion 322d into a gap between a surface on which the plate-shaped object PL is placed and the plate-shaped object PL. Further, even when an attitude of the end effector 300 with respect to the plate-shaped object PL is different from the attitude in FIG. 4 and the surface 322da has an angle so as not to be parallel to a surface of the plate-shaped object PL, it is easily to insert the plate-shaped object PL into the recess 322a. At least a part of the second clamping portion 322d may include a tapered shape such that the thickness thereof in the direction D6A decreases as advancing in the direction D4A. The plate-shaped object PL inserted into the recess 322a is in contact with the surface 322ca and one or both of the surfaces 322da and 322db, and is clamped by the clamping portions 322c and 322d. Accordingly, the plate-shaped object PL is held by the first holding portion 320.

The second holding portion 330 is attached to the main body 310 in an operable manner. The second holding portion 330 is arranged in the direction D6B with respect to the first holding portion 320. The second holding portion 330 faces the first holding portion 320 in the direction D6A. The second holding portion 330 includes a link mechanism 331 connected to an end portion 310a of the main body 310 in the direction D4A, and a tip end link 332 connected to a tip end of the link mechanism 331. For example, the end portion 310a may be positioned on a side opposite to the mechanical interface of the main body 310.

The link mechanism 331 includes links 331a to 331e. The links 331a and 331b are pivotally connected to the main body 310 at respective proximal ends thereof, and extend along each other. A tip end of the link 331a is pivotally connected to an intermediate position of the link 331c. A tip end of the link 331b is pivotally connected to a proximal end of the link 331d. The links 331c and 331d are pivotally connected to the tip end link 332 at respective tip ends thereof, and extend along each other. A proximal end of the link 331c is pivotally connected to a pivoting member 352 that pivots integrally with the driven shaft 350. In FIG. 4, a connection portion between the link 331c and the pivoting member 352 is positioned in the direction D6A with respect to connection portions between the links 331a and 331b and the main body 310. A connection portion between the tip end of the link 331a and the link 331c is pivotally connected to one end of the link 331e. A connection portion between the tip end of the link 331b and the proximal end of the link 331d is pivotally connected to the other end of the link 331e. The link mechanism 331 has a structure including two parallel links connected to each other.

The tip end link 332 extends toward the direction D6A as advancing in the direction D4A. The tip end link 332 extends toward the first holding portion 320. The tip end link 332 has a shape that tapers toward a tip end, and has, for example, a wedge-shaped or claw-shaped cross-sectional shape. The width of the tip end link 332 in the directions D5A and D5B is smaller than the widths of the clamping portions 322c and 322d in the directions D5A and D5B. A contact area in which the tip end link 332 can come into contact with the article is smaller than a contact area in which the clamping portions 322c and 322d can come into contact with the article.

In the first end effector 300 in the state illustrated in FIG. 4, when the driving device ME1 rotationally drives the driven shaft 350 toward a direction R1 via the drive shaft 340, the first end effector 300 is in the state illustrated in FIG. 5. When the pivoting member 352 pivots toward the direction R1 to move the proximal end of the link 331c, the link mechanism 331 moves the tip end link 332 in parallel in the directions D4B and D6A. Accordingly, the tip end of the tip end link 332 approaches the second clamping portion 322d. The second holding portion 330 moves the tip end link 332 to approach or separate away from the second clamping portion 322d. The second holding portion 330 presses the plate-shaped object PL inserted into the recess 322a against the second clamping portion 322d by using the tip end link 332, thereby strengthening the holding of the plate-shaped object PL. That is, the first holding portion 320 and the second holding portion 330 grip the plate-shaped object PL.

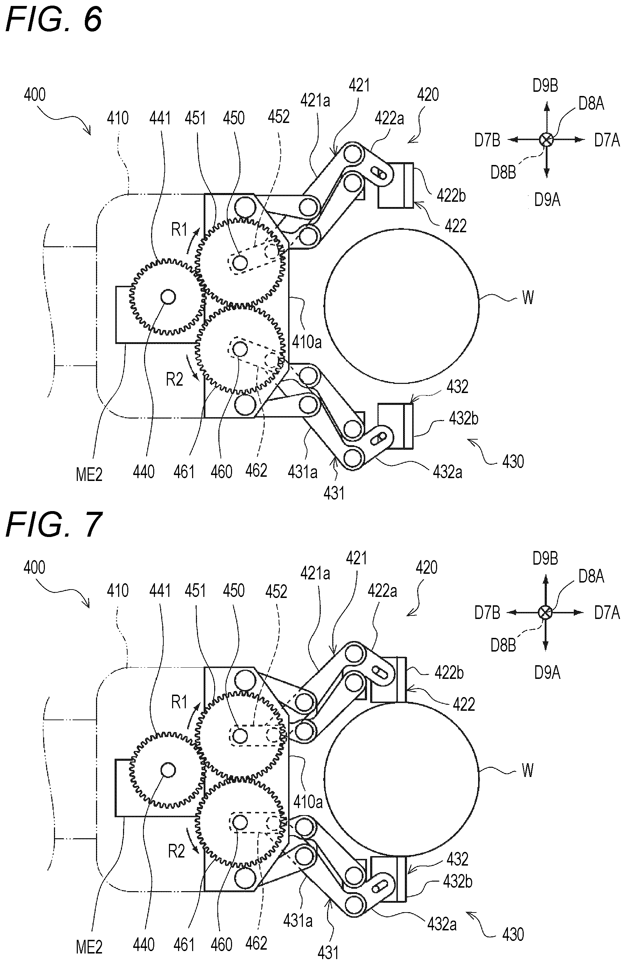

FIGS. 6 and 7 are side views illustrating examples of components in two different states of the second end effector 400 of the robot 1 in FIG. 1. FIGS. 6 and 7 show the inside of a main body 410 of the second end effector 400. As illustrated in FIG. 6, the second end effector 400 includes the main body 410, a first holding portion 420, a second holding portion 430, the driving device ME2, a drive shaft 440, a first driven shaft 450, and a second driven shaft 460. The main body 410 includes a mechanical interface connected to the mechanical interface of the link LA6 or LB6 of the robot arm 200A or 200B.

The driving device ME2, the drive shaft 440, and the driven shafts 450 and 460 are arranged in the main body 410. The drive shaft 440 is connected to the driving device ME2 so as to be rotationally driven by the driving device ME2. The first driven shaft 450 is engaged with the drive shaft 440 by gears, and the second driven shaft 460 is engaged with the first driven shaft 450 by gears. A driven gear 451 rotating integrally with the first driven shaft 450 is engaged with a drive gear 441 rotating integrally with the drive shaft 440. A driven gear 461 rotating integrally with the second driven shaft 460 is engaged with the driven gear 451. The driving device ME2 rotationally drives the driven shafts 450 and 460 in directions opposite to each other via the drive shaft 440.

Here, directions D7A, D7B, D8A, D8B, D9A, and D9B illustrated in FIGS. 6 and 7 are directions relative to the second end effector 400, and are defined similarly to the directions D4A, D4B, D5A, D5B, D6A, and D6B of the first end effector 300. The directions D7A and D7B respectively correspond to the directions D4A and D4B, the directions D8A and D8B respectively correspond to the directions D5A and D5B, and the directions D9A and D9B respectively correspond to the directions D6A and D6B.

The holding portions 420 and 430 are attached to an end portion 410a of the main body 410 in the direction D7A in an operable manner. The second holding portion 430 is arranged in the direction D9A with respect to the first holding portion 420. The second holding portion 430 faces the first holding portion 420 in the direction D9B. For example, the end portion 410a may be positioned on a side opposite to the mechanical interface of the main body 410.

The holding portions 420 and 430 include link mechanisms 421 and 431 connected to the end portion 410a, and tip end links 422 and 432 connected to tip ends of the link mechanisms 421 and 431, respectively. The link mechanisms 421 and 431 have structures similar to that of the link mechanism 331 of the first end effector 300. Although not limited to the following, in the present embodiment, the link mechanisms 421 and 431 have mutually symmetrical structures with respect to an axis extending in the directions D7A and D7B. A link 421a of the link mechanism 421 is pivotally connected to a pivoting member 452 that pivots integrally with the first driven shaft 450. A link 431a of the link mechanism 431 is pivotally connected to a pivoting member 462 that pivots integrally with the second driven shaft 460.

The tip end links 422 and 432 include connection portions 422a and 432a connected to the link mechanisms 421 and 431, and tip end portions 422b and 432b, respectively. The tip end portions 422b and 432b are connected to the connection portions 422a and 432a in a slidable manner, respectively. Sliding directions of the tip end portions 422b and 432b are direction along a plane including the direction D7A and the direction D9A, and are directions intersecting the direction D7A and the direction D9A. Structures for sliding the tip end portions 422b and 432b may be any structure as long as a sliding operation can be achieved. For example, one of the tip end portions 422b and 432b and one of the connection portions 422a and 432a may include a protrusion, and the other one thereof may include a recess such as a hole, for example, a slot, or a groove that receives the protrusion in a slidable manner.

When receiving a force in the direction D7B in a state of sliding toward the direction D7A with respect to the connection portion 422a, the tip end portion 422b may move toward the direction D9B while moving toward the direction D7B. When receiving a force in the direction D9B in the above state, the tip end portion 422b may move toward the direction D7B while moving toward the direction D9B. When receiving a force in the direction D7B in a state of sliding toward the direction D7A with respect to the connection portion 432a, the tip end portion 432b may move toward the direction D9A while moving toward the direction D7B. When receiving a force in the direction D9A in the above state, the tip end portion 422b may move toward the direction D7B while moving toward the direction D9A. In the present embodiment, the tip end portions 422b and 432b are connected to the connection portions 422a and 432a, respectively, so as not to change the directions thereof with respect to the connection portions 422a and 432a. However, the tip end portions 422b and 432b may be pivotally connected to the connection portions 422a and 432a, respectively, and the directions thereof may be freely changed.

Biasing members such as coil springs may be arranged in the connection portions 422a and 432a, and may bias the tip end portions 422b and 432b toward the direction D7A. The biasing member of the connection portion 422a absorbs an impact received by the holding portion 420 when the tip end portion 422b receives a force in the direction D7B or D9B from an object W. The biasing member of the connection portion 432a absorbs an impact received by the holding portion 430 when the tip end portion 432b receives a force in the direction D7B or D9A from the object W. The biasing members enable the holding portions 420 and 430 to stably grip the object W by sandwiching the object W by the tip end links 422 and 432 with an elastic force.

In the second end effector 400 in the state illustrated in FIG. 6, when the driving device ME2 rotationally drives the first driven shaft 450 in the direction R1 via the drive shaft 440, the first driven shaft 450 rotationally drives the second driven shaft 460 in a direction R2 opposite to the direction R1. The second end effector 400 is in the state illustrated in FIG. 7. When the pivoting member 452 pivots toward the direction R1, the link mechanism 421 moves the tip end link 422 in parallel in the directions D7B and D9A. When the pivoting member 462 pivots toward the direction R2, the link mechanism 431 moves the tip end link 432 in parallel in the directions D7B and D9B. Accordingly, the second end effector 400 can sandwich and grip the object W by the tip end links 422 and 432.

### [Operations of Robot System]

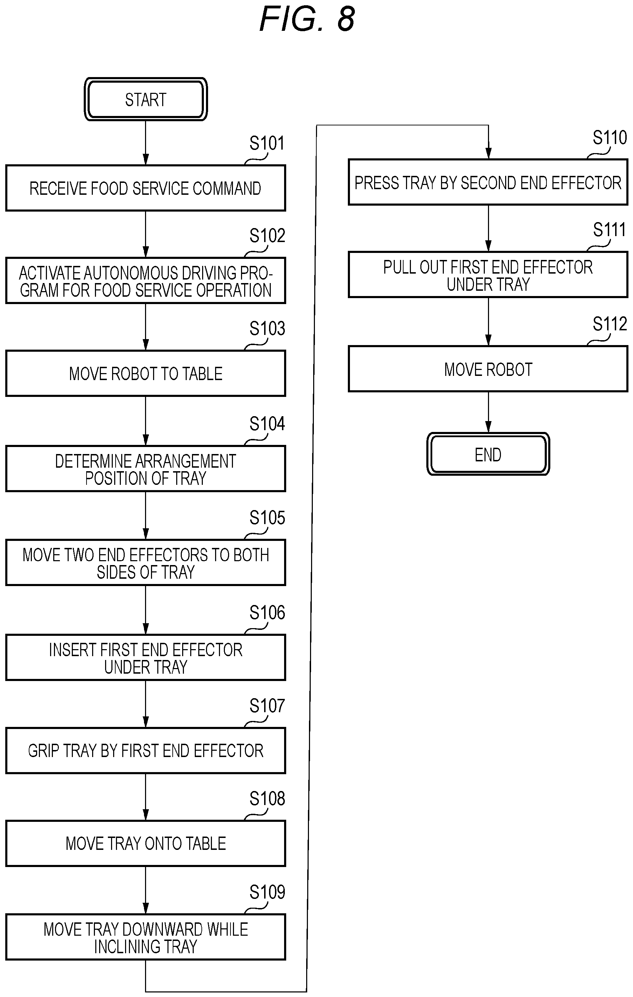

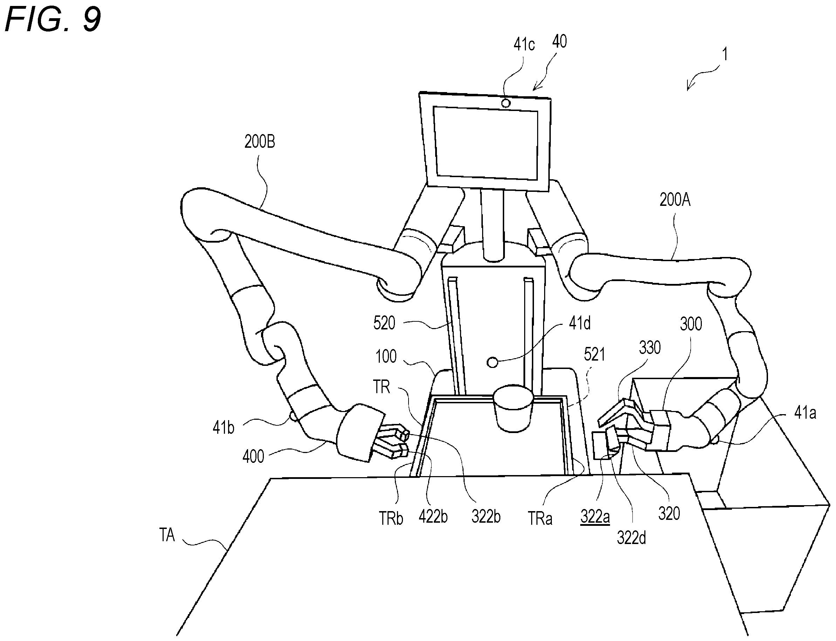

An example of a first operation of the robot system A according to the embodiment will be described with reference to FIG. 8. FIG. 8 is a flowchart illustrating the example of the first operation of the robot system A according to the embodiment. FIGS. 9 to 13 are perspective views each illustrating an example of a state of the robot 1 included in the first operation. In the first operation, the robot 1 uses the robot arms 200A and 200B by autonomous driving to provide food service to the user by using a tray TR which is an example of the plate-shaped object.

In step S101, the input device 2 receives a food service command for commanding the food service by the tray TR to the user using a table TA. The input device 2 transmits the food service command and position information on the table TA to the robot 1. At this time, the tray TR on which a vessel containing a beverage as an example of food is placed is arranged on the shelves 521 of the rack 520 of the robot 1 by a service provider.

In step S102, the control device 600 activates an autonomous driving program for a food service operation of the robot 1, and executes a subsequent control of the robot 1 according to the autonomous driving program. The autonomous driving program for the food service operation is a program for causing the robot 1 to autonomously transfer the tray TR from a starting point to a destination point and provide the food service by the tray TR at the destination point.

In step S103, the control device 600 moves the robot 1 to the table TA while operating the moving device 100 and causing the imaging device 40 to capture an image. The control device 600 moves the robot 1 while avoiding an obstacle by using map information stored in the memory M, a result of the image process on image data acquired by the imaging device 40, and the like.

In step S104, when the robot 1 arrives at the front of the table TA, the control device 600 causes the imaging device 40 to capture images of the table TA and the tray TR. The control device 600 performs the image process on the image data acquired by the imaging device 40 so as to detect a position, a shape, and a size of the tray TR on the rack 520 and a position, a shape, and a size of the table TA. Further, the control device 600 determines a destination position on an edge TRa of the tray TR to be gripped by the first end effector 300 and a destination position on the table TA in which the tray TR is to be arranged. In the subsequent control, the control device 600 causes the robot 1 to operate while causing the imaging device 40 to capture an image. Further, the control device 600 adjusts positions and attitudes of the first end effector 300, the second end effector 400, and the tray TR by using a result of the process on the image data acquired by the imaging device 40 and the like.

In step S105, as illustrated in FIG. 9, the control device 600 causes the robot arm 200A to move the first end effector 300 such that the second clamping portion 322d of the first end effector 300 is positioned on a lateral side of and in the vicinity of the destination position on the edge TRa of the tray TR. The control device 600 causes the robot arm 200B to move the second end effector 400 such that the tip end portions 422b and 432b of the second end effector 400 are positioned on a lateral side of and in the vicinity of an edge TRb of the tray TR opposite to the edge TRa. For example, the second clamping portion 322d and the tip end portions 422b and 432b may be arranged at positions opposed to each other with the tray TR sandwiched therebetween. The order of movement of the end effectors 300 and 400 may be any order.

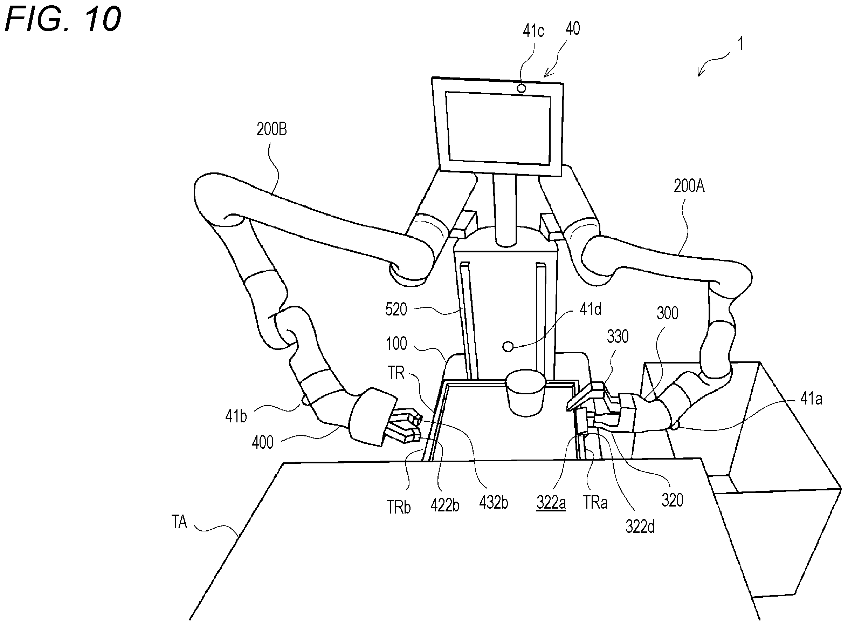

In step S106, as illustrated in FIG. 10, the control device 600 causes the robot arm 200A to move the first end effector 300 such that the second clamping portion 322d of the first end effector 300 is inserted under the tray TR. The control device 600 adjusts the attitude of the first end effector 300 such that the surface 322da of the second clamping portion 322d is horizontal under the tray TR. The control device 600 causes the robot arm 200A to move the first end effector 300 until the edge TRa of the tray TR is inserted into the recess 322a of the first holding portion 320. At this time, the tip end portions 422b and 432b of the second end effector 400 abut the edge TRb of the tray TR to restrain sliding of the tray TR. At the time of inserting the second clamping portion 322d under the tray TR, the control device 600 may cause the robot arm 200B to move the second end effector 400 such that the tip end portions 422b and 432b approach the edge TRb. In this step, the first end effector 300 is in the state illustrated in FIG. 4.

The control device 600 may detect the insertion of the edge TRa into the recess 322a by using the result of the process on the image data acquired by the imaging device 40, loads of the joint driving devices of one or both of the robot arms 200A and 200B, a detection result of one or both of the force sensors arranged at the connection portions between the end effectors 300 and 400 and the robot arms 200A and 200B, or two or more thereof.

In step S107, the control device 600 operates the second holding portion 330 of the first end effector 300, and causes the second clamping portion 322d and the second holding portion 330 to grip the tray TR. Accordingly, the first end effector 300 is in the state illustrated in FIG. 5.

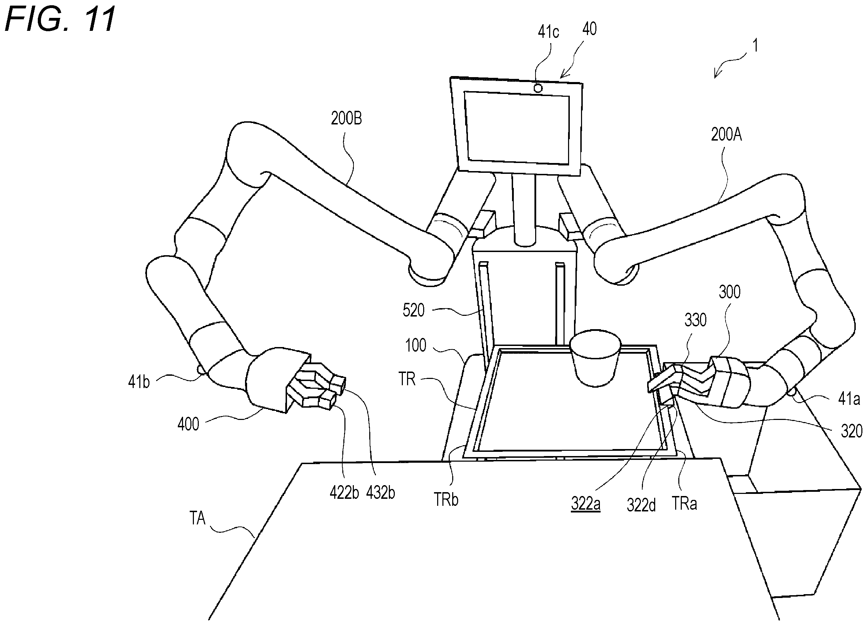

In step S108, as illustrated in FIG. 11, the control device 600 causes the robot arm 200A to move the first end effector 300 such that the tray TR rises and moves to the destination position on the table TA. The control device 600 causes the robot arm 200B to move the second end effector 400 such that the tip end portions 422b and 432b separate from the edge TRb of the tray TR. The control device 600 adjusts a movement path of the tray TR by using the result of the process on the image data acquired by the imaging device 40 and the like. The order of movement of the end effectors 300 and 400 may be any order.

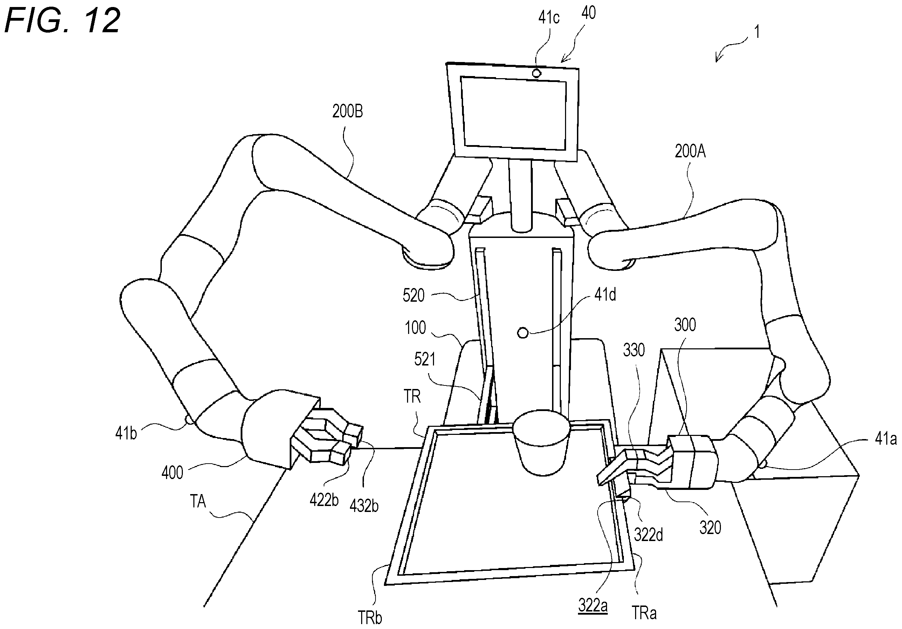

In step S109, as illustrated in FIG. 12, the control device 600 causes the robot arm 200A to move the first end effector 300 such that the tray TR moves downward while the tray TR is slightly inclined so that the edge TRb is positioned below the edge TRa. When the edge TRb comes into contact with a surface of the table TA, the control device 600 stops the movement of the first end effector 300. The control device 600 may detect the contact between the edge TRb and the table TA by using the result of the process on the image data acquired by the imaging device 40, the loads of the joint driving devices of the robot arm 200A, the detection result of the force sensor arranged at the connection portion between the first end effector 300 and the robot arm 200A, or two or more thereof.

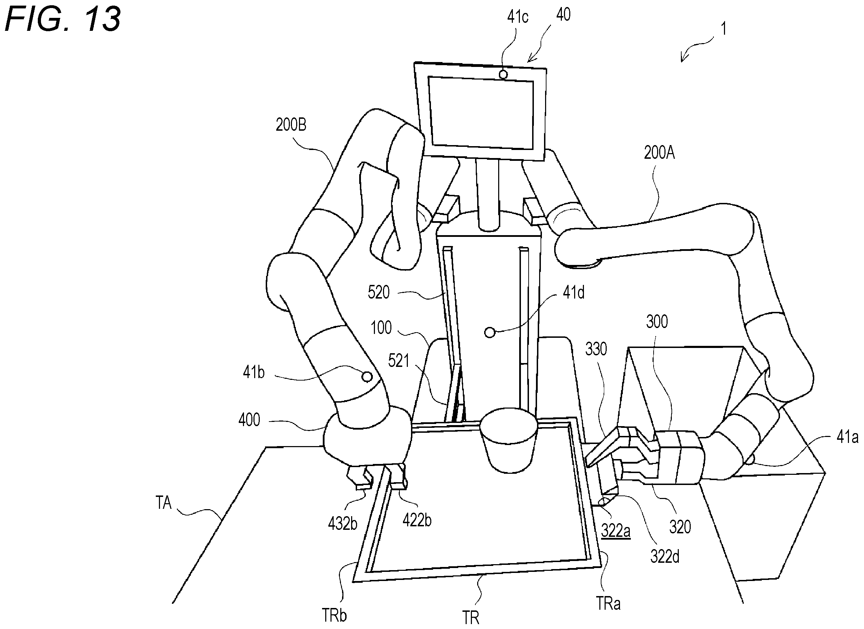

In step S110, as illustrated in FIG. 13, the control device 600 causes the robot arm 200B to move the second end effector 400 such that the tip end portion 422b or 432b of the second end effector 400 comes into contact with an upper surface of the tray TR near the edge TRb and presses the tray TR downward toward the surface of the table TA. The control device 600 may detect a pressing force of the second end effector 400 and adjust the pressing force by using the loads of the joint driving devices of the robot arm 200B, the detection result of the force sensor arranged at the connection portion between the second end effector 400 and the robot arm 200B, or a combination thereof.

In step Sill, the control device 600 causes the robot arm 200A to move the first end effector 300 such that the second clamping portion 322d of the first end effector 300 is pulled out under the tray TR. After pulling out the second clamping portion 322d, the control device 600 causes the robot arm 200B to move the second end effector 400 such that the tip end portions 422b and 432b separate from the tray TR.

In step S112, the control device 600 operates the moving device 100 so as to move the robot 1 to a predetermined standby position or a place specified via the input device 2.

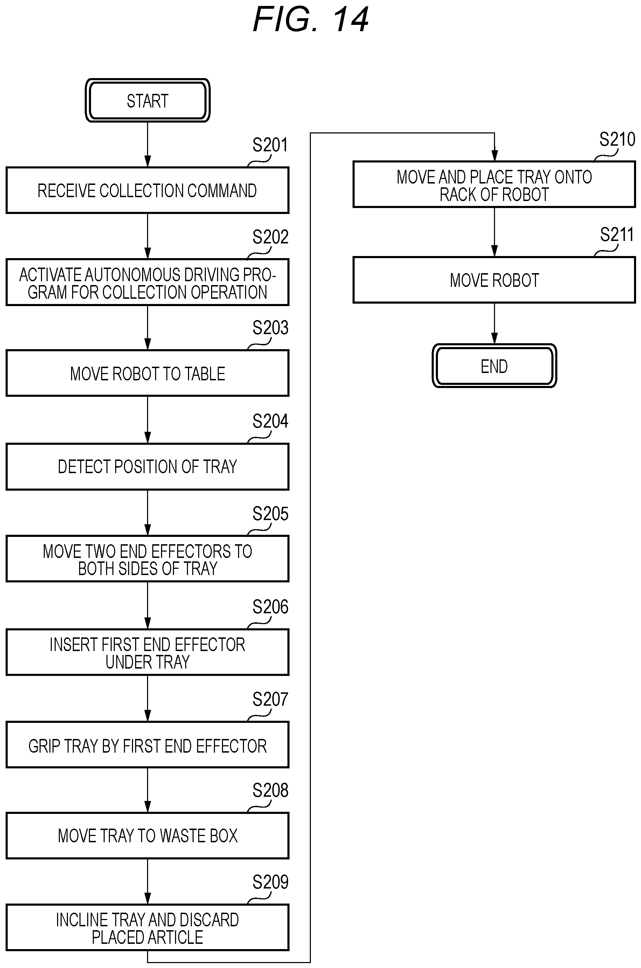

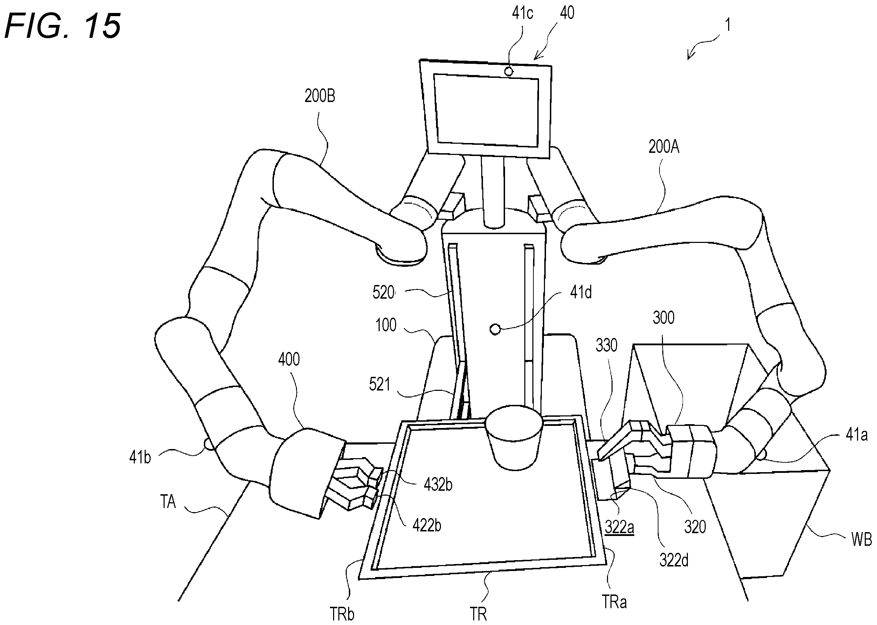

An example of a second operation of the robot system A according to the embodiment will be described with reference to FIG. 14. FIG. 14 is a flowchart illustrating the example of the second operation of the robot system A according to the embodiment. FIGS. 15 to 18 are perspective views each illustrating an example of a state of the robot 1 included in the second operation. In the second operation, the robot 1 uses the robot arms 200A and 200B by the autonomous driving to collect, from the user, the tray TR which is an example of the plate-shaped object.

In step S201, the input device 2 receives a collection command for commanding the collection of the tray TR on the table TA from the user. The input device 2 transmits the collection command and the position information on the table TA to the robot 1.

In step S202, the control device 600 activates an autonomous driving program for a collection operation of the robot 1, and executes a subsequent control of the robot 1 in accordance with the autonomous driving program. The autonomous driving program for the collection operation is a program for causing the robot 1 to autonomously move from a starting point to a destination point, collect the tray TR at the destination point, and discard an item on the tray TR.

In step S203, the control device 600 moves the robot 1 to the table TA while operating the moving device 100 and causing the imaging device 40 to capture an image as in step S103 of the first operation.

In step S204, when the robot 1 arrives at the front of the table TA, the control device 600 causes the imaging device 40 to capture images of the table TA, the tray TR, and a waste box WB. The control device 600 performs the image process on the image data acquired by the imaging device 40 so as to detect a position, a shape, and a size of the table TA, a position, a shape, and a size of the tray TR on the table TA, and a position, a shape, and a size of the waste box WB. Further, the control device 600 determines a destination position on the edge TRa of the tray TR to be gripped by the first end effector 300. In the subsequent control, the control device 600 causes the robot 1 to operate while causing the imaging device 40 to capture an image. Further, the control device 600 adjusts positions and attitudes of the first end effector 300, the second end effector 400, and the tray TR by using a result of the process on the image data acquired by the imaging device 40 and the like.

In step S205, as illustrated in FIG. 15, the control device 600 causes the robot arm 200A to move the first end effector 300 such that the second clamping portion 322d of the first end effector 300 is positioned on a lateral side of and in the vicinity of the destination position on the edge TRa of the tray TR. The control device 600 causes the robot arm 200B to move the second end effector 400 such that the tip end portions 422b and 432b of the second end effector 400 are positioned on a lateral side of and in the vicinity of the edge TRb of the tray TR. For example, the second clamping portion 322d and the tip end portions 422b and 432b may be arranged at positions opposed to each other with the tray TR sandwiched therebetween. The order of movement of the end effectors 300 and 400 may be any order.

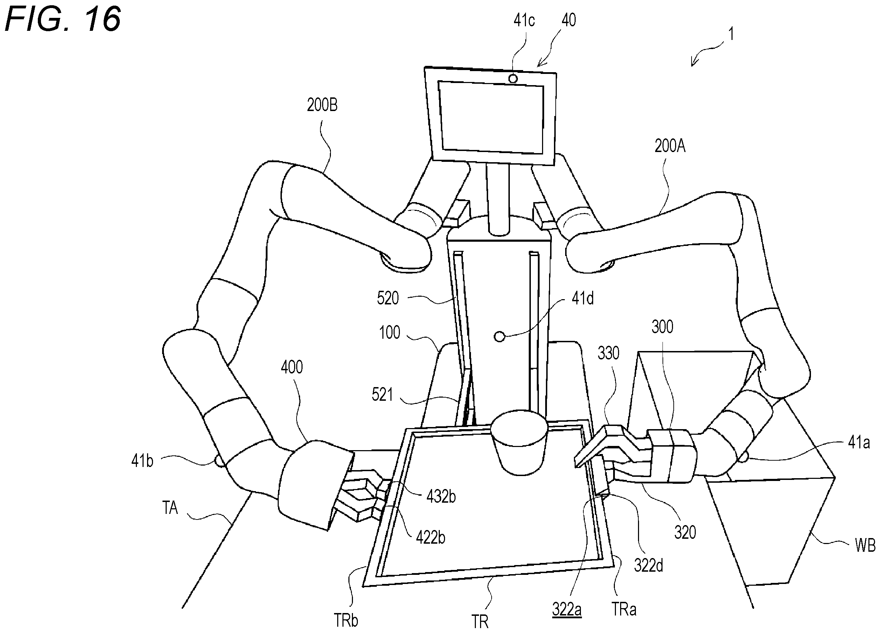

In step S206, as illustrated in FIG. 16, the control device 600 causes the robot arm 200A to move the first end effector 300 such that the second clamping portion 322d of the first end effector 300 is inserted between the tray TR and the surface of the table TA. The control device 600 causes the robot arm 200A to move the first end effector 300 until the edge TRa of the tray TR is inserted into the recess 322a of the first holding portion 320. At this time, the tip end portions 422b and 432b of the second end effector 400 abut the edge TRb of the tray TR to restrain sliding of the tray TR. At the time of inserting the second clamping portion 322d under the tray TR, the control device 600 may cause the robot arm 200B to move the second end effector 400 such that the tip end portions 422b and 432b approach the edge TRb. In this step, the first end effector 300 is in the state illustrated in FIG. 4.

The control device 600 may detect the insertion of the edge TRa into the recess 322a by using the result of the process on the image data acquired by the imaging device 40, loads of the joint driving devices of one or both of the robot arms 200A and 200B, a detection result of one or both of the force sensors arranged at the connection portions between the end effectors 300 and 400 and the robot arms 200A and 200B, or two or more thereof.

In step S207, the control device 600 operates the second holding portion 330 of the first end effector 300, and causes the second clamping portion 322d and the second holding portion 330 to grip the tray TR. Accordingly, the first end effector 300 is in the state illustrated in FIG. 5.

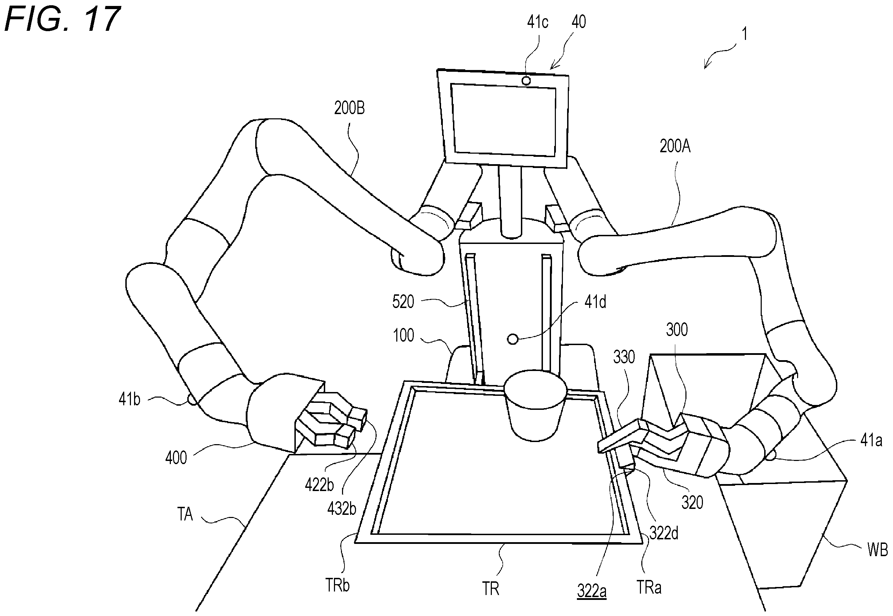

In step S208, as illustrated in FIG. 17, the control device 600 causes the robot arm 200A to move the first end effector 300 such that the tray TR rises and moves to a position above the waste box WB. The control device 600 causes the robot arm 200B to move the second end effector 400 such that the tip end portions 422b and 432b separate from the edge TRb of the tray TR. The control device 600 adjusts a movement path of the tray TR by using the result of the process on the image data acquired by the imaging device 40 and the like. The order of movement of the end effectors 300 and 400 may be any order.

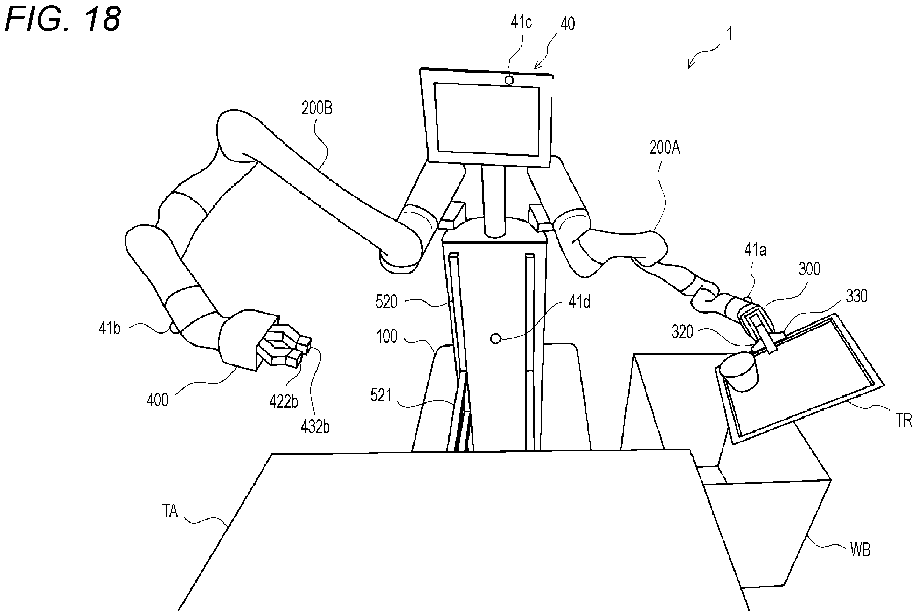

In step S209, as illustrated in FIG. 18, the control device 600 causes the robot arm 200A to move the first end effector 300 such that the tray TR is inclined above the waste box WB and the beverage vessel on the tray TR is dropped.

In step S210, the control device 600 causes the robot arm 200A to move the first end effector 300 such that the tray TR is moved and placed onto the shelves 521 of the rack 520. In the process of this step, the control device 600 may cause the robot arm 200B to press the second end effector 400 against the tray TR as in steps S110 and S111 of the first operation.

In step S211, the control device 600 operates the moving device 100 so as to move the robot 1 to a predetermined standby position, a return place of the tray TR, or a place specified via the input device 2.

An example of a third operation of the robot system A according to the embodiment will be described. In the third operation, the robot 1 uses only the robot arm 200A by the autonomous driving to collect, from the user, the tray TRA which is an example of the plate-shaped object. A structure of a first end effector 300A used in the third operation may be the same as the structure of the first end effector 300 used in the first operation and the second operation. However, in this example, in order to facilitate the third operation, the structure of the first end effector 300A used in the third operation is partially different from the structure of the first end effector 300 used in the first operation and the second operation. Further, a structure of a tray TRA used in the third operation is partially different from a structure of the tray TR used in the first operation and the second operation.

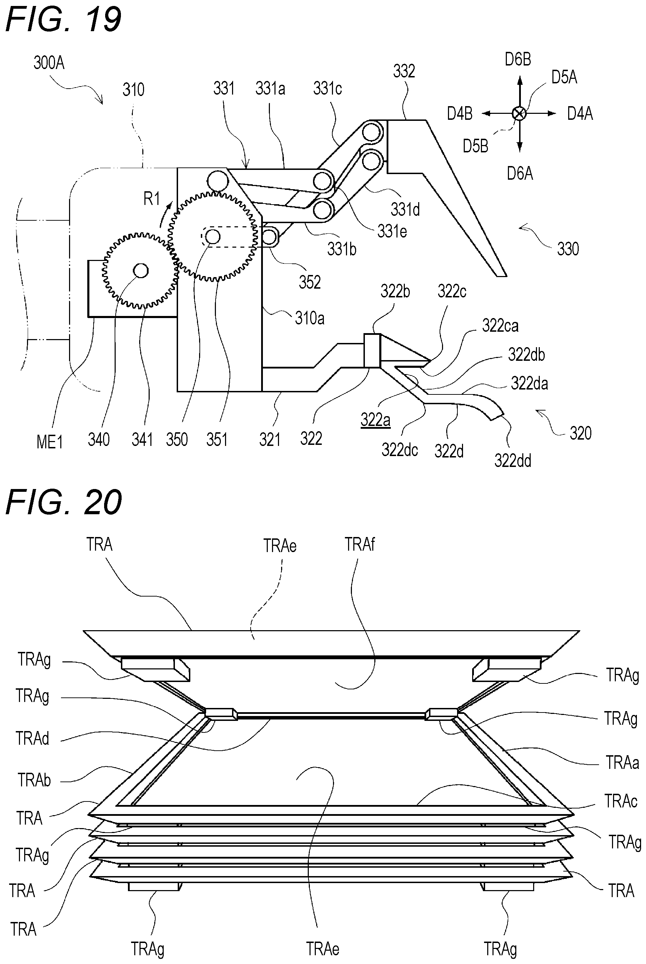

FIG. 19 is a side view illustrating an example of components of the first end effector 300A as in FIG. 4. As illustrated in FIG. 19, a structure of the second clamping portion 322d of the first end effector 300A is different from a structure of the second clamping portion 322d of the first end effector 300.

In the first end effector 300A, a tip end portion 322dd of the second clamping portion 322d extending from the base portion 322b in the direction D4A protrudes in the direction D6A with respect to a portion of the second clamping portion 322d adjacent to the tip end portion 322dd in the direction D4B. The tip end portion 322dd protrudes in a direction opposite to a direction toward the first clamping portion 322c.

In FIG. 19, the tip end portion 322dd is flexed, specifically, is curved so as to protrude in the direction D6A, and may be bent. The tip end portion 322dd may include a protrusion protruding in the direction D6A, and the thickness of the tip end portion 322dd in the direction D6A may be larger than the thickness of the portion of the second clamping portion 322d adjacent to the tip end portion 322dd in the direction D4B. When the protrusion or the thickness changes, the tip end portion 322dd may be flexed or may not be flexed. In FIG. 19, the surface 322da of the second clamping portion 322d is curved near the tip end portion 322dd, and may be flat.

FIG. 20 is a perspective view illustrating an example of components of the tray TRA. As illustrated in FIG. 20, the tray TRA has a shape similar to that of the tray TR, and includes supports TRAg. The plurality of supports TRAg are arranged on a back surface TRAf of the tray TRA and protrude from the back surface TRAf. The back surface TRAf is a surface opposite to a placement surface TRAe of the tray TRA on which the item is placed. Each support TRAg has a rectangular parallelepiped shape, and may have any shape.

In FIG. 20, four supports TRAg are arranged in the vicinity of four corners of the tray TRA having a rectangular plate shape. The four supports TRAg are arranged in the vicinity of four edges TRAa, TRAb, TRAc, and TRAd of the tray TRA. The edges TRAa and TRAb are positioned on opposite sides with the placement surface TRAe sandwiched therebetween and protrude from the placement surface TRAe. The edges TRAc and TRAd are positioned on opposite sides with the placement surface TRAe sandwiched therebetween and protrude from the placement surface TRAe. The number of the supports TRAg is not limited to four, and may be changed depending on the shape and size of the tray TRA. The number of the supports TRAg may be any number as long as the supports TRAg can stably support the tray TRA on a surface on which the tray TRA is placed.

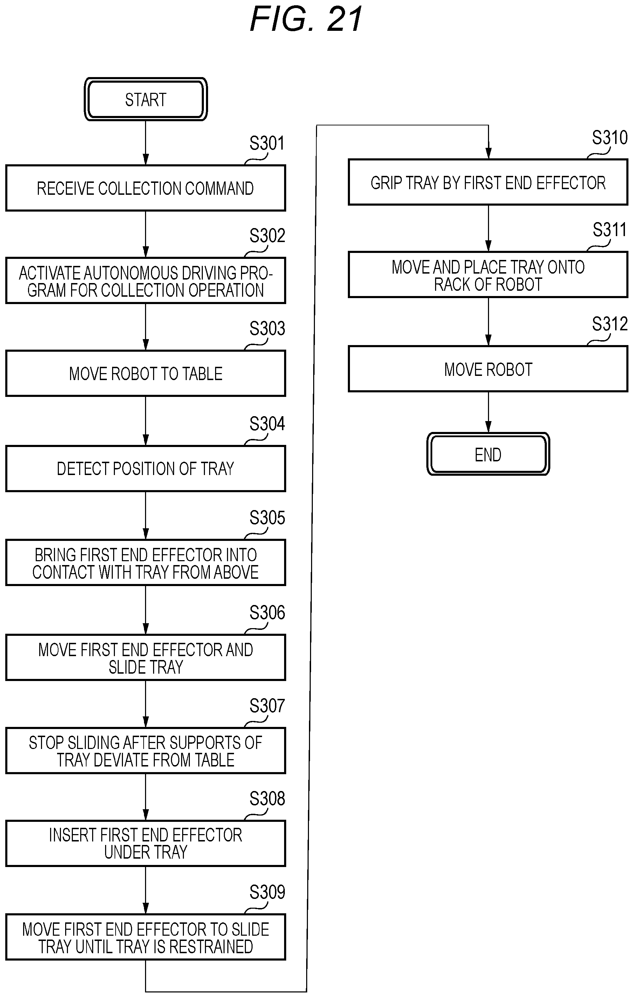

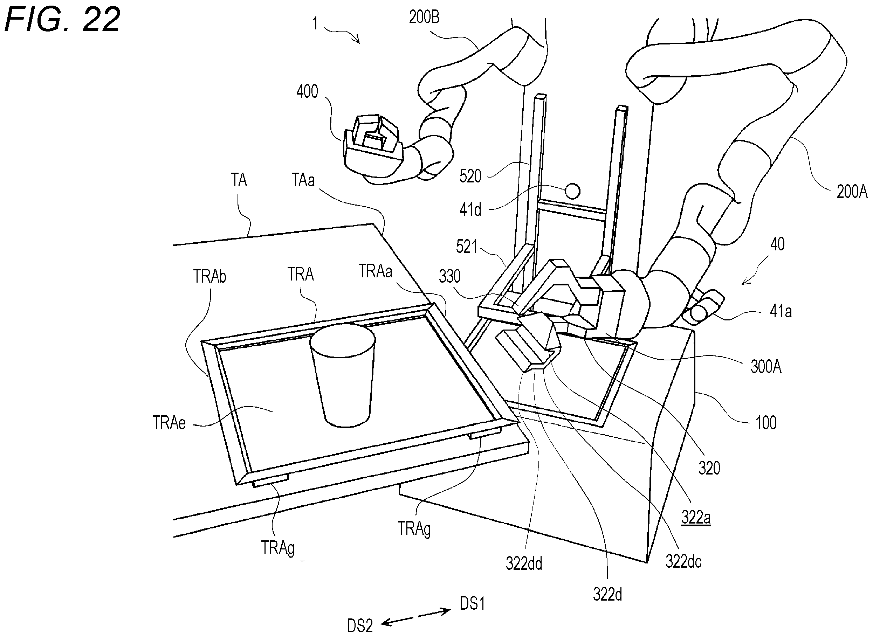

FIG. 21 is a flowchart illustrating the example of the third operation of the robot system A according to the embodiment. FIGS. 22 to 29 are perspective views each illustrating an example of a state of the robot 1 included in the third operation. In step S301, the input device 2 receives the collection command for commanding the collection of the tray TRA on the table TA from the user. The input device 2 transmits the collection command and the position information on the table TA to the robot 1. The table TA is an example of a support plate.

In steps S302 to S304, the control device 600 performs the same process as those in steps S202 to S204 of the second operation to move the robot 1 to the table TA and detect a position of the tray TRA as illustrated in FIG. 22. Further, the control device 600 determines a destination position on the edge TRAa of the tray TRA to be gripped by the first end effector 300A.

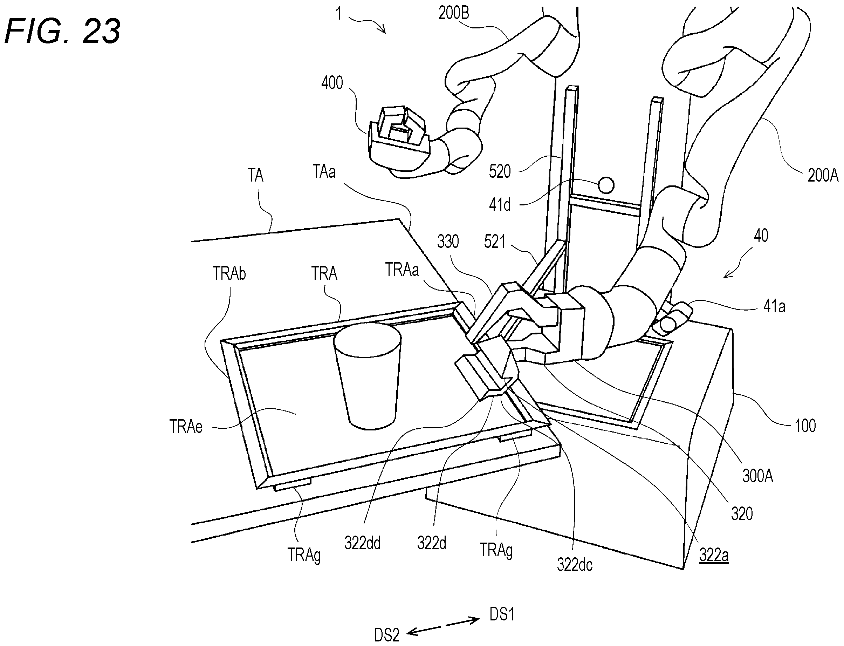

In step S305, as illustrated in FIG. 23, the control device 600 causes the robot arm 200A to move the first end effector 300A such that the first end effector 300A moves above the placement surface TRAe of the tray TRA over the edge TRAa of the tray TRA. The placement surface TRAe is an example of an upper surface of the tray TRA. Further, the control device 600 causes the robot arm 200A to lower the first end effector 300A such that the tip end portion 322dd of the second clamping portion 322d of the first end effector 300A is brought into contact with the placement surface TRAe from above and presses the placement surface TRAe downward. Since the tip end portion 322dd protrudes, a force is easily transmitted from the second clamping portion 322d to the tray TRA. The bent portion 322dc of the second clamping portion 322d is positioned in the vicinity of the edge TRAa above the placement surface TRAe.

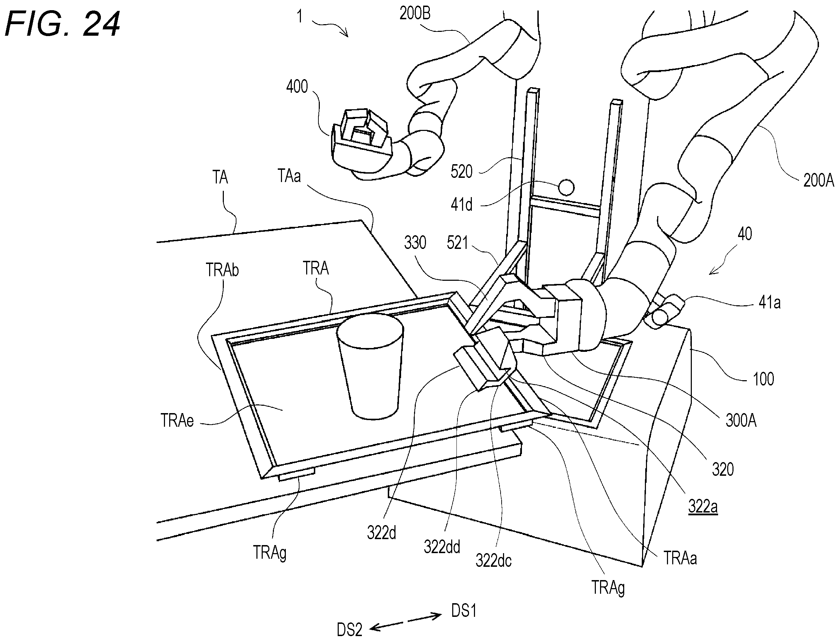

In step S306, as illustrated in FIG. 24, the control device 600 causes the robot arm 200A to move the first end effector 300A in a direction DS1 that is a lateral direction from the edge TRAb toward the edge TRAa. At this time, the robot arm 200A moves the first end effector 300A in a direction along the placement surface TRAe while pressing the tip end portion 322dd of the second clamping portion 322d against the placement surface TRAe. The robot arm 200A can slide the tray TRA in the direction DS1 by a friction force between the tip end portion 322dd and the placement surface TRAe.

For example, when the friction force is equal to or less than a friction force between the supports TRAg of the tray TRA and the table TA, the tip end portion 322dd slides on the placement surface TRAe in the direction DS1, and the second clamping portion 322d or the bent portion 322dc thereof abuts or engages with the edge TRAa of the tray TRA. The robot arm 200A can also slide the tray TRA in the direction DS1 by the abutment or the engagement. When the abutment or the engagement occurs, the tip end portion 322dd of the second clamping portion 322d may not be pressed against the placement surface TRAe, and may not be in contact with the placement surface TRAe.

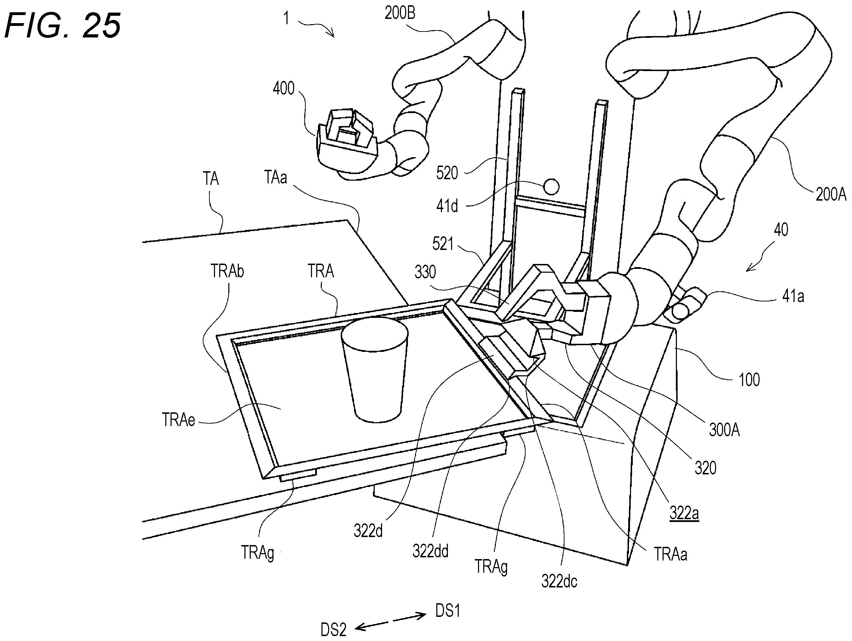

In step S307, as illustrated in FIG. 25, since the tray TRA slides, the two supports TRAg in the vicinity of the edge TRAa of the tray TRA deviate from the table TA. Accordingly, the edge TRAa and the two supports TRAg protrude in the direction DS1 from the edge TAa of the table TA, and the tray TRA is inclined such that the edge TRAa is positioned below the edge TRAb. As a result, the contact between the tip end portion 322dd of the second clamping portion 322d and the placement surface TRAe and the abutment and engagement between the second clamping portion 322d and the edge TRAa are released, and the sliding of the tray TRA is stopped. After the contact or the engagement is released, the control device 600 ends the operation of the robot arm 200A for sliding the tray TRA and proceeds to the next operation.

The control device 600 may detect the release of the contact or the engagement by using the result of the process on the image data acquired by the imaging device 40, the loads of the joint driving devices of the robot arm 200A, a detection result of a force sensor arranged at a connection portion between the first end effector 300A and the robot arm 200A, or two or more thereof.

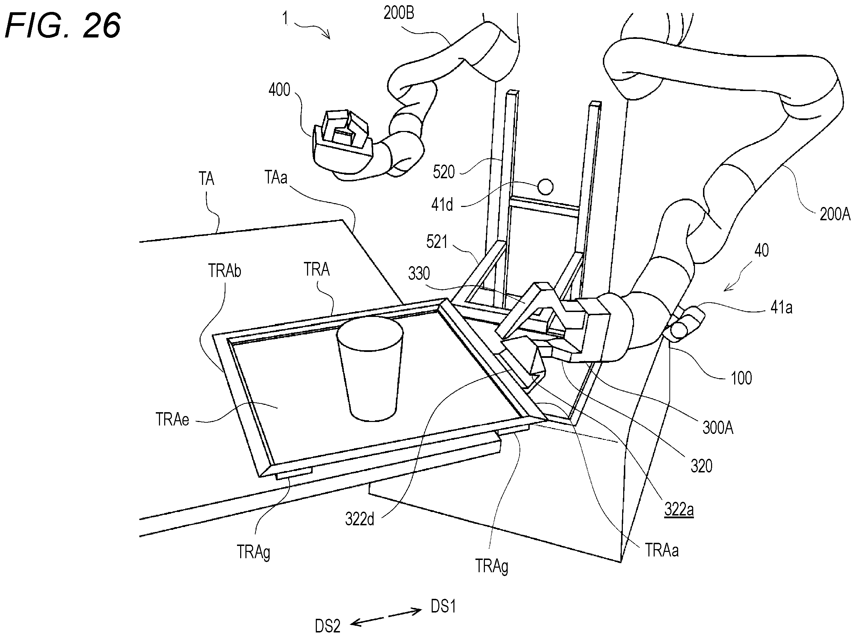

In step S308, as illustrated in FIG. 26, the control device 600 causes the robot arm 200A to move the first end effector 300A such that the edge TRAa of the tray TRA is inserted into the recess 322a of the first holding portion 320 by inserting the second clamping portion 322d of the first end effector 300A under the tray TRA and moving the second clamping portion 322d in a direction DS2. The direction DS2 is a direction opposite to the direction DS1.

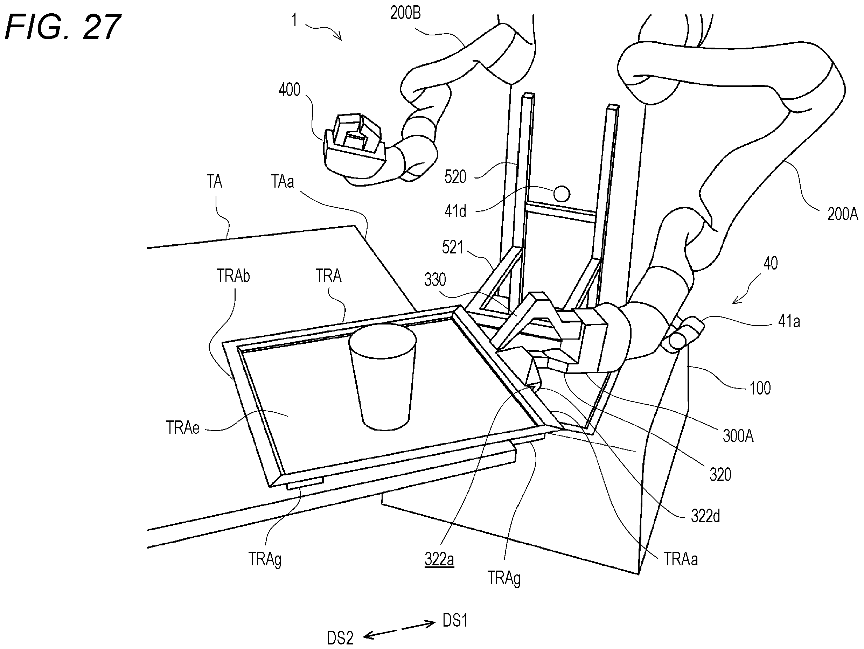

In step S309, as illustrated in FIG. 27, the control device 600 causes the robot arm 200A to move the first end effector 300A in the direction DS2 such that the edge TRAa of the tray TRA in the recess 322a is pushed in the direction DS2 by the first holding portion 320. The robot arm 200A slides the tray TRA in the direction DS2 via the first holding portion 320. The supports TRAg in the vicinity of the edge TRAa abut the edge TAa of the table TA and restrain the sliding of the tray TR. Accordingly, the edge TRAa is deeply inserted into the recess 322a and is deeply engaged therewith.

The control device 600 may detect the abutment of the supports TRAg by using the result of the process on the image data acquired by the imaging device 40, the loads of the joint driving devices of the robot arm 200A, the detection result of the force sensor arranged at the connection portion between the first end effector 300A and the robot arm 200A, or two or more thereof.

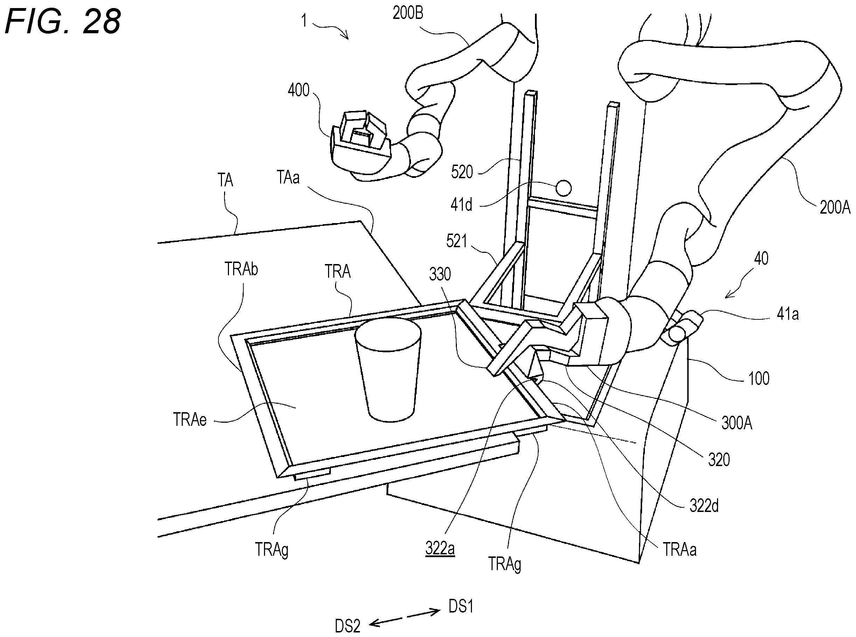

In step S310, as illustrated in FIG. 28, the control device 600 operates the second holding portion 330 of the first end effector 300A, and causes the second clamping portion 322d and the second holding portion 330 to grip the tray TRA.

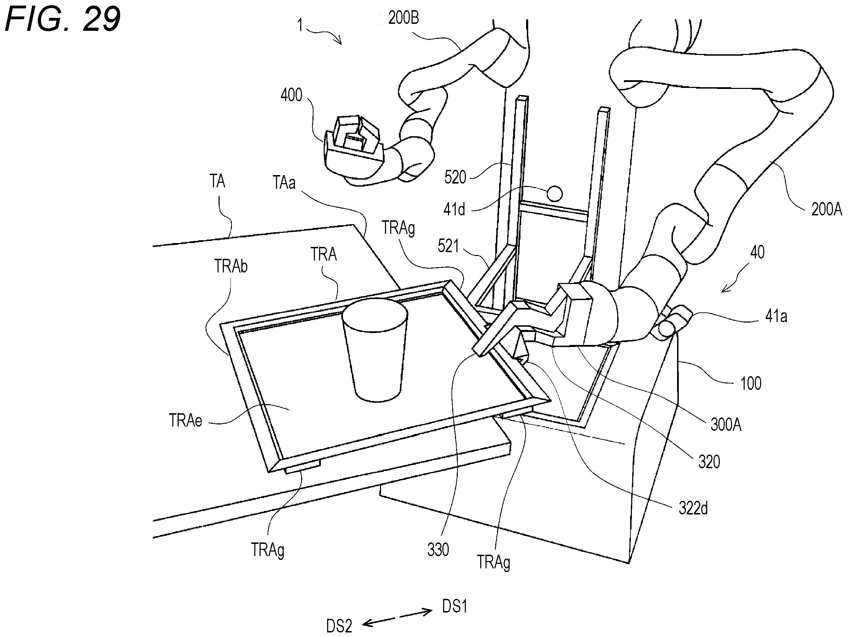

In step S311, as illustrated in FIG. 29, the control device 600 causes the robot arm 200A to move the first end effector 300A such that the tray TR rises and moves to be placed on the shelf 521 of the rack 520.

In step S312, the control device 600 operates the moving device 100 so as to move the robot 1 to a predetermined standby position, a return place of the tray TRA, or a place specified via the input device 2.

### (Other Embodiments)

Although the example of the embodiment of the present disclosure has been described above, the present disclosure is not limited to the embodiment described above. That is, various modifications and improvements may be made within the scope of the present disclosure. For example, embodiments obtained by applying various modifications to the embodiment and embodiments constructed by combining components in different embodiments are also included in the scope of the present disclosure.

In the embodiment, the robot 1 is used as a robot for providing a service to a person, and may be used for other applications. For example, the robot 1 may be used for a work in a factory, a warehouse, and the like.

In the robot 1 according to the embodiment, the support 500 may have a structure capable of moving the robot arms 200A and 200B up and down in the upper and lower directions D1A and D1B. For example, the support 500 may have a stretchable structure such as a nested structure. The support column 510 may have a structure capable of moving the display 61 up and down in the upper and lower directions D1A and D1B. For example, the support column 510 may have a stretchable structure such as a nested structure, and may have a structure in which the support column 510 itself moves in the upper and lower directions D1A and D1B. A drive source for the support 500 and the support column 510 may be an electric actuator such as a servo motor, and may be an actuator that is operated by other power sources such as a gas pressure and a hydraulic pressure.

In the robot 1 according to the embodiment, the robot arms 200A and 200B are arranged in one moving device 100, but the present disclosure is not limited thereto. For example, the robot arms 200A and 200B may be arranged in an object that is not movable. The robot arms 200A and 200B may be arranged in different objects.

The robot 1 according to the embodiment includes the two robot arms 200A and 200B, but the present disclosure is not limited thereto. For example, the number of robot arms 200 provided in the robot 1 may be one, and may be three or more. For example, the robot 1 provided with only the robot arm 200A including the first end effector 300 or 300A can perform the first operation, the second operation, and the third operation. The robot 1 can perform the third operation as described above. The robot 1 can perform the first operation and the second operation by using the tray TRA used in the third operation. Although in the first operation and the second operation according to the embodiment, the robot arm 200B holds the tray TR so as not to move by using the second end effector 400, the robot 1 may perform the first operation and the second operation by using the engagement of the supports TRAg of the tray TRA, the abutment of the tray TRA, and the like.

Examples of aspects of the technique of the present disclosure are as follows. A control method of a robot according to a first aspect of the present disclosure includes: causing a first robot arm provided in the robot and a second robot arm provided in the robot to move a first end effector of the first robot arm and a second end effector of the second robot arm such that the first end effector and the second end effector are arranged on both sides of a placed plate-shaped object; causing the first robot arm to move the first end effector toward a first end portion of the plate-shaped object, and causing the first end effector to operate so as to grip the first end portion; and causing the first robot arm to move the first end effector toward a destination position, and causing the first end effector to place the plate-shaped object at the destination position.

According to the first aspect, when the first end effector moves toward the first end portion of the plate-shaped object, the second end effector restrains the plate-shaped object from sliding. Accordingly, it is possible to reliably position the first end effector to be capable of gripping the plate-shaped object. The first end effector positioned in this way holds the plate-shaped object by gripping the plate-shaped object. The plate-shaped object is transferred by only the first robot arm. Therefore, it is possible to reliably transfer the plate-shaped object and reduce operations of the two robot arms related to transferring.

The control method of the robot according to a second aspect of the present disclosure based on the first aspect may include: in a process of placing the plate-shaped object at the destination position, causing the first robot arm to move the first end effector so as to provide, to the plate-shaped object, an inclination at which a second end portion of the plate-shaped object opposite to the first end portion is lower than the first end portion; causing the first robot arm to move the first end effector so as to lower the plate-shaped object in an inclination state and place the second end portion on a surface in the destination position; causing the first end effector to release gripping of the plate-shaped object; and causing the first robot arm to move the first end effector so as to pull out a part of the first end effector from between the plate-shaped object and the surface in the destination position.

According to the second aspect, after the second end portion of the plate-shaped object is brought into contact with the surface in the destination position, the part of the first end effector is pulled out under the plate-shaped object, and the plate-shaped object is placed. The plate-shaped object can be gently placed.

In the control method of the robot according to a third aspect of the present disclosure based on the second aspect, at the time of pulling out the part of the first end effector, the second robot arm may be caused to move the second end effector so as to press the second end portion of the plate-shaped object toward the surface in the destination position by the second end effector.

According to the third aspect, the plate-shaped object is prevented from sliding together with the first end effector at the time of pulling out the part of the first end effector. Therefore, it is possible to reliably arrange the plate-shaped object to the destination position.

In the control method of the robot according to a fourth aspect of the present disclosure based on any one of the first aspect to the third aspect, at the time of moving the first end effector toward the first end portion, the second robot arm may be caused to move the second end effector so as to move the second end effector to approach a second end portion of the plate-shaped object opposite to the first end portion.

According to the fourth aspect, the plate-shaped object is prevented from being pushed and moved by the first end effector at the time of moving the first end effector toward the first end portion. Therefore, the plate-shaped object can be reliably gripped.

In the control method of the robot according to a fifth aspect of the present disclosure based on any one of the first aspect to the fourth aspect, the second end effector may include a first holding portion and a second holding portion that are operable to grip an item. According to the fifth aspect, when the first end effector holds the plate-shaped object, the second end effector and the second robot arm can perform other operations such as placement of the item onto the plate-shaped object and removal thereof.

A control method of a robot according to a sixth aspect of the present disclosure includes: causing a first robot arm provided in the robot to move a first end effector of the first robot arm such that the first end effector is brought into contact with a plate-shaped object placed on a support plate from above; causing the first robot arm to move the first end effector such that the first end effector laterally slides the plate-shaped object; causing the first robot arm to move the first end effector such that a first end portion of the plate-shaped object which protrudes from the support plate due to the sliding is gripped by the first end effector; and causing the first robot arm to move the first end effector to a destination position and causing the first end effector to place the plate-shaped object at the destination position.

According to the sixth aspect, it is possible to transfer the plate-shaped object by using one first robot arm. The first robot arm can transfer the plate-shaped object by sliding and gripping the plate-shaped object using the first end effector. Since the first end portion of the plate-shaped object after the sliding protrudes from the support plate, the first end effector can easily and reliably grip the first end portion. Therefore, it is possible to reliably transfer the plate-shaped object and reduce operations of the robot arm related to transferring.

In the control method of the robot according to a seventh aspect of the present disclosure based on the sixth aspect, the plate-shaped object may include a support that supports the plate-shaped object on the support plate and protrudes from the plate-shaped object, and the control method may include, in a process of sliding the plate-shaped object, ending an operation of the first robot arm for sliding the plate-like plate-shaped object when the support deviates from the support plate.

According to the seventh aspect, when the support deviates from the support plate, the inclination of the plate-shaped object changes. Accordingly, the contact between the first end effector and the plate-shaped object can be released. An operation of the robot arm for releasing the contact between the first end effector and the plate-shaped object is unnecessary.

The control method of a robot according to an eighth aspect of the present disclosure based on the seventh aspect may include, in a process of causing the first end effector to grip the first end portion of the plate-shaped object, causing the first robot arm to move the first end effector such that the first end effector is brought into contact with the first end portion of the plate-shaped object to slide the plate-shaped object; and causing the first end effector to perform a gripping operation when the support comes into contact with the support plate.

According to the eighth aspect, the support in contact with the support plate restrains the sliding of the plate-shaped object. Accordingly, it is possible to reliably engage the first end effector with the first end portion, and it is possible to reliably grip the first end portion by the first end effector due to the engagement.

In the control method of the robot according to a ninth aspect of the present disclosure based on any one of the first aspect to the eighth aspect, at the time of moving the first end effector toward the first end portion, the first robot arm may be caused to move the first end effector so as to insert a first holding portion, which is immovable with respect to the first end effector, of holding portions provided in the first end effector under the plate-shaped object, and at the time of causing the first end effector to operate so as to grip the first end portion, a second holding portion, which is movable with respect to the first end effector, of the holding portions provided in the first end effector may be operated so as to sandwich the first end portion of the plate-shaped object by the second holding portion and the first holding portion.

According to the ninth aspect, since the first holding portion is immovable and the second holding portion is movable, the structure of the first end effector is simplified. Due to the structure of the first end effector that is arranged at the tip end of the first robot arm, as an actuator for driving the holding portions, a strong and large electric actuator is often not suitable for mounting on the first end effector. A high load acts on the holding portion that supports the first end portion of a plate-shaped object from below. Since the immovable first holding portion is used as such a holding portion, it is possible to stably and reliably hold the plate-shaped object without using a strong and large electric actuator.

In the control method of the robot according to a tenth aspect of the present disclosure based on the ninth aspect, the first holding portion may include a plate-shaped portion that is inserted under the plate-shaped object and extends in a first direction, the first direction being a direction away from the first end effector. According to the tenth aspect, the first holding portion is easily inserted under the plate-shaped object.

In the control method of the robot according to an eleventh aspect of the present disclosure based on the tenth aspect, the plate-shaped portion may have a dimension larger than that of the second holding portion in a second direction intersecting the first direction. According to the eleventh aspect, the first holding portion can stably support the plate-shaped object from below.

In the control method of the robot according to a twelfth aspect of the present disclosure based on the tenth aspect or the eleventh aspect, the first holding portion may include, in a base portion of the plate-shaped portion in a direction opposite to the first direction, a recess that receives an end portion of the plate-shaped object and extends in the second direction intersecting the first direction. According to the twelfth aspect, the end portion of the plate-shaped object abuts a wall surface of the recess and is held by the wall surface. It is possible to reliably grip the plate-shaped object and reduce a load acting on the second holding portion.

In the control method of the robot according to a thirteenth aspect of the present disclosure based on the twelfth aspect, the plate-shaped portion may be bent to narrow the recess toward the base portion of the plate-shaped portion. According to the thirteenth aspect, the recess has a shape expanding toward an open end. Therefore, it is easy to insert the end portion of the plate-shaped object into the recess.

In the control method of the robot according to a fourteenth aspect of the present disclosure based on the twelfth aspect or the thirteenth aspect, the plate-shaped portion may extend in the first direction from an inner surface of the recess facing the plate-shaped portion. According to the fourteenth aspect, the first holding portion can stably support the plate-shaped object from below while facilitating the insertion of the end portion of the plate-shaped object into the recess.

In the control method of the robot according to a fifteenth aspect of the present disclosure based on any one of the first aspect to the fourteenth aspect, the plate-shaped object placed on a placement portion of the robot may be placed at the destination position. According to the fifteenth aspect, it is possible to transfer the plate-shaped object placed on the robot to a destination position other than the robot.

In the control method of the robot according to a sixteenth aspect of the present disclosure based on any one of the first aspect to the fourteenth aspect, the plate-shaped object placed at a position different from the robot is placed on a placement portion of the robot. According to the sixteenth aspect, it is possible to place, on the robot, the plate-shaped object placed at a position other than the robot.

A robot according to a seventeenth aspect of the present disclosure includes: a control device configured to execute the control method according to any one of the first aspect to the sixteenth aspect of the present disclosure; the first robot arm; the second robot arm; the first end effector; the second end effector; and a moving device on which the first robot arm and the second robot arm are mounted. According to the seventeenth aspect, the same effects as those of the control method of the robot according to the aspects of the present disclosure can be obtained.

A robot according to an eighteenth aspect of the present disclosure includes: a control device configured to execute the control method according to any one of the first aspect to the sixteenth aspect of the present disclosure; the first robot arm; the first end effector; and a moving device on which the first robot arm is mounted. According to the eighteenth aspect, the same effects as those of the control method of the robot according to the aspects of the present disclosure can be obtained.

The control method according to the present disclosure may be implemented by a processor, a processing circuit, a combination of the processing circuit and a circuit, an IC card, a single module, or the like. The technique of the present disclosure may be a program for executing the control method according to the present disclosure, and may be a non-transitory computer-readable medium storing the program. It is needless to say that the program can be distributed via a transmission medium such as the Internet.

The functions of the elements disclosed in the present specification can be implemented by using a circuit or a processing circuit including a general-purpose processor, a dedicated processor, an integrated circuit, an ASIC, a conventional circuit, and/or a combination thereof configured or programmed to implement the disclosed functions. The processor includes a transistor and other circuits, and thus is regarded as a processing circuit or a circuit. In the present disclosure, the circuit, the unit, and the means are hardware that executes the listed functions or hardware that is programmed to execute the listed functions. The hardware may be the hardware disclosed in the present specification, and may be another known hardware configured or programmed to execute the listed functions. When the hardware is a processor considered as a kind of circuit, the circuit, the means, or the unit is a combination of hardware and software, and the software is used for the hardware and/or processor.

The numbers such as the ordinal number and the quantity used above are all illustrated for specifically describing the technique of the present disclosure, and the present disclosure is not limited to the illustrated numbers. The connection relation between the components is illustrated for specifically describing the technique of the present disclosure, and the connection relation implementing the function of the present disclosure is not limited thereto.

Since the scope of the present disclosure is defined by the appended claims rather than the descriptions of the specification so that the present disclosure can be implemented in various forms without departing from the scope of the essential features thereof, the exemplary embodiments and modifications are illustrative and not limited. All changes and equivalents of the claims and the scope thereof are intended to be included in the claims.

## Claims

1. A control method of a robot, comprising:
causing a first robot arm and a second robot arm that are provided in the robot to move a first end effector of the first robot arm and a second end effector of the second robot arm such that the first end effector and the second end effector are arranged on both sides of a placed plate-shaped object;
causing the first robot arm to move the first end effector toward a first end portion of the plate-shaped object to operate the first end effector such that the first end effector grips the first end portion; and
causing the first robot arm to move the first end effector toward a destination position to place the plate-shaped object at the destination position by the first end effector.

2. The control method according to claim 1, wherein
a process of placing the plate-shaped object at the destination position includes:
causing the first robot arm to move the first end effector so as to provide, to the plate-shaped object, an inclination at which a second end portion of the plate-shaped object opposite to the first end portion is lower than the first end portion;
causing the first robot arm to move the first end effector so as to lower the plate-shaped object in an inclination state and place the second end portion on a surface of the destination position;
causing the first end effector to release gripping of the plate-shaped object; and
causing the first robot arm to move the first end effector so as to pull out a part of the first end effector from between the plate-shaped object and the surface of the destination position.

3. The control method according to claim 2, wherein
a process at the time pulling out the part of the first end effector includes causing the second robot arm to move the second end effector so as to press the second end portion of the plate-shaped object toward the surface of the destination position by the second end effector.

4. The control method according to any one of claims 1 to 3, wherein
a process at the time of moving the first end effector toward the first end portion includes causing the second robot arm to move the second end effector so as to approach the second end effector to a second end portion of the plate-shaped object opposite to the first end portion.

5. The control method according to any one of claims 1 to 4, wherein
a process at the time of moving the first end effector toward the first end portion includes causing the first robot arm to move the first end effector so as to insert a first holding portion of holding portions provided in the first end effector under the plate-shaped object, the first holding portion being immovable with respect to the first end effector, and
a process at the time of operating the first end effector so as to grip the first end portion includes operating a second holding portion of the holding portions provided in the first end effector so as to sandwich the first end portion of the plate-shaped object by the second holding portion and the first holding portion, the second holding portion being movable with respect to the first end effector.

6. The control method according to claim 5, wherein
the first holding portion includes a plate-shaped portion that is to be inserted under the plate-shaped object and extends in a first direction that is a direction away from the first end effector.

7. The control method according to claim 6, wherein
the plate-shaped portion has a dimension larger than a dimension of the second holding portion in a second direction intersecting the first direction.

8. The control method according to claim 6 or 7, wherein
the first holding portion includes, in a base portion of the plate-shaped portion in a direction opposite to the first direction, a recess that is configured to receive an end portion of the plate-shaped object and extends in a second direction intersecting the first direction.

9. The control method according to claim 8, wherein
the plate-shaped portion is bent to narrow the recess toward the base portion of the plate-shaped portion.

10. The control method according to claim 8 or 9, wherein
the plate-shaped portion extends in the first direction with respect to an inner surface of the recess facing the plate-shaped portion.

11. The control method according to any one of claims 1 to 10, wherein
the second end effector includes a first holding portion and a second holding portion that are operable to grip an item.

12. The control method according to any one of claims 1 to 11, wherein
the plate-shaped object placed on a placement portion of the robot is placed at the destination position.

13. The control method according to any one of claims 1 to 12, wherein
the plate-shaped object placed at a position different from the robot is placed on the placement portion of the robot.

14. A robot, comprising:
a control device configured to execute the control method according to any one of claims 1 to 13;
the first robot arm;
the second robot arm;
the first end effector;
the second end effector; and
a moving device on which the first robot arm and the second robot arm are mounted.
